# EUROPÄISCHE PATENTANMELDUNG

(11) **EP 4 721 552 A1**
(43) Veröffentlichungstag der Anmeldung: **08.04.2026**
(21) Anmeldenummer: 25192246.4
(22) Anmeldetag: 28.07.2025
(51) Int. Cl.: A01F 15/04, A01F 15/14

(54) **BALLENPRESSE**

(30) Priorität: 01.10.2024 DE 102024128473
(71) Anmelder: Maschinenfabrik Bernard Krone GmbH & Co. KG, 48480 Spelle (DE)
(72) Erfinder: van den Hurk, Tony, Lieshout (NL); Kuhmann, Maik, 48599 Gronau (DE)

(57) **Zusammenfassung**

Die Erfindung betrifft eine Ballenpresse mit einem Presskanal, in welchem Erntegutballen bezüglich einer Längsachse von vorne nach hinten entlang einer Pressachse förderbar sind, sowie mit einer Bindeanordnung, die eine Nadelschwinge mit einer Mehrzahl von bezüglich einer Querachse zueinander versetzt angeordneten Bindenadeln aufweist, von denen jede ausgebildet ist, einen Bindemittelstrang bezüglich einer Hochachse aufwärts durch den Presskanal hindurchzuführen, sowie wenigstens eine vordere Halteeinheit, die dazu eingerichtet ist, einen durch eine Bindenadel aufwärts durch den Presskanal hindurchgeführten ersten Halteabschnitt eines Bindemittelstrangs festzuhalten. Um beim Bilden eines Erntegutballens die Belastung des Bindemittels zu reduzieren, ist vorgesehen, dass die Bindeanordnung wenigstens eine Auslenkungsvorrichtung aufweist, welche durch einen Auslenkungsantrieb aus einer Bereitschaftsposition in eine Auslenkungsposition verstellbar ist, wodurch wenigstens ein gegenüber der vorderen Halteeinheit bewegliches Erfassungselement der Auslenkungsvorrichtung wenigstens anteilig entlang der Pressachse bewegbar ist und wenigstens ein Bindemittelstrang im Abstand zum ersten Halteabschnitt durch ein Erfassungselement erfassbar und gegenüber der vorderen Halteeinheit auslenkbar ist, um Bindemittel durch den Presskanal nachzuziehen und eine von der vorderen Halteeinheit über das Erfassungselement verlaufende Bindemittelschlaufe zu erzeugen, welche am Erfassungselement einen Richtungswechsel bezüglich der Pressachse aufweist.

## Beschreibung

Die vorliegende Erfindung betrifft eine Ballenpresse nach dem Oberbegriff von Anspruch 1 sowie ein Verfahren nach Anspruch 17.

Ballenpressen werden in der Landwirtschaft eingesetzt, um Erntegut wie zum Beispiel Heu oder Stroh, welches zuvor aufgenommen wurde, zu Ballen zu verpressen. Das Erntegut wird normalerweise durch eine Pick-up, die in die Ballenpresse integriert ist, vom Boden aufgenommen. Im Falle einer Quaderballenpresse erfolgt das Verpressen des aufgesammelten Ernteguts in zwei Stufen. Zunächst wird das von der Pick-up übernommene und gegebenenfalls durch eine Schneidvorrichtung geschnittene Erntegut durch eine Fördervorrichtung bzw. Sammelvorrichtung innerhalb einer Sammelkammer weitergefördert und dabei gerafft bzw. vorverdichtet. Der Sammelkammer ist eine Presskammer oder ein Presskanal nachgeordnet. Dort wirkt ein oszillierender Presskolben auf das Erntegut ein und führt das eigentliche Verpressen durch. Es wird somit vorverdichtetes Erntegut portionsweise in den Presskanal überführt, wo ein sukzessiver Aufbau des Quaderballens erfolgt.

Wenn der Quaderballen eine vorgesehene Größe erreicht hat, wird er mittels eines Bindematerials oder Bindemittels gebunden, bevor er ausgeworfen wird. Bei dem Bindemittel kann es sich zum Beispiel um ein Garn oder ein thermoplastisches Band handeln. Im Zuge des Bindevorgangs wird ein Endbereich des Bindemittels an dessen Oberseite von einer Haltevorrichtung festgehalten, wobei der Bindemittelstrang entlang der Oberseite zum hinteren Ende, danach abwärts und anschließend unterhalb des Ballens nach vorne zurückgeführt ist. Ein sich anschließender Abschnitt des Bindemittelstrangs wird von einer Bindenadel geführt. Um den Bindevorgang eines Ballens abzuschließen und den Bindevorgang eines nachfolgenden Ballens zu beginnen, werden die Bindenadeln von unten durch den Presskanal geführt und übergeben jeweils einen Abschnitt eines Bindemittelstrangs an eine Haltevorrichtung. Dieser kann mit dem festgehaltenen Endbereich verbunden werden, entweder durch Verknoten oder durch Verschweißen, wodurch eine geschlossene Schleife um den Ballen gebildet wird.

Beim sukzessiven Anwachsen des Ballens muss auch die in der Entstehung befindliche, noch offene Schleife wachsen. Insbesondere wird an der Oberseite des Ballens nach und nach mehr Bindemittel benötigt. Dies geschieht dadurch, dass der von der Haltevorrichtung festgehaltene Bindemittelstrang an der Hinterseite des Ballens aufwärts durch den Presskanal gezogen wird. Allerdings steht der im Aufbau befindliche Ballen dort in Kontakt mit dem zuletzt fertiggestellten, aber noch nicht ausgeworfenen Ballen. Letzterer bildet ein Widerlager, welches das Verpressen des nachfolgenden Ballens unterstützt oder ermöglicht. Aufgrund der zwischen den Ballen wirkenden Anpresskraft unterliegt der Bindemittelstrang einer erhöhten Reibung, die sich wiederum auf die notwendige Durchzugkraft auswirkt. Insbesondere beim intervallweisen Einwirken des Presskolbens steigt die Reibung sprunghaft an. Somit ergibt sich eine hohe Belastung des Bindemittelstrangs, die schlimmstenfalls dazu führen kann, dass dieser reißt.

Aufgabe der Erfindung ist es, beim Bilden eines Erntegutballens, insbesondere bei Verdichten, die Belastung des Bindemittels zu reduzieren.

Die Aufgabe wird gelöst mit einer Ballenpresse mit den Merkmalen des unabhängigen Patentanspruchs 1. Vorteilhafte Ausführungsformen sind den abhängigen Ansprüchen entnehmbar.

Dafür wird eine Ballenpresse geschaffen mit einem Presskanal, in welchem Erntegutballen bezüglich einer Längsachse von vorne nach hinten entlang einer Pressachse förderbar sind, sowie mit einer Bindeanordnung, die eine Nadelschwinge mit einer Mehrzahl von bezüglich einer Querachse zueinander versetzt angeordneten Bindenadeln aufweist, von denen jede ausgebildet ist, einen Bindemittelstrang bezüglich einer Hochachse aufwärts durch den Presskanal hindurchzuführen, sowie wenigstens eine vordere Halteeinheit, die dazu eingerichtet ist, einen durch eine Bindenadel aufwärts durch den Presskanal hindurchgeführten ersten Halteabschnitt des Bindemittelstrangs festzuhalten.

Bei der Ballenpresse handelt es sich normalerweise um eine Quaderballenpresse oder Großpackenpresse. Die Ballenpresse kann selbstfahrend mit eigenem Fahrantrieb oder als Anhänger ohne eigenen Fahrantrieb ausgebildet sein. Es könnte sich auch um eine stationäre Ballenpresse handeln. Sie weist einen Presskanal sowie eine Bindeanordnung auf, wobei der Begriff "Bindeanordnung" hier nicht einschränkend auszulegen ist. Insbesondere dienen nicht alle Elemente und Teile der Bindeanordnung notwendigerweise im engeren Sinne zum Binden.

Im Presskanal erfolgen die eigentliche Ballenformung und der Pressvorgang. Er definiert eine Pressachse, zu welcher er wenigstens überwiegend parallel verlaufen kann. Entlang der Pressachse, insbesondere parallel zu dieser, können im Betrieb Erntegutballen gefördert werden, welche nachfolgend auch einfach als "Ballen" bezeichnet werden. Der Presskanal weist bevorzugt einen rechteckigen Querschnitt auf, entsprechend dem Querschnitt der zu fertigenden Erntegutballen. Typischerweise ist im Presskanal ein Presskolben angeordnet, der dazu eingerichtet ist, durch eine oszillierende Bewegung parallel zur Pressachse auf das Erntegut einzuwirken und es so zu verpressen. Durch die Wirkung des Presskolbens wird das Erntegut zum einen verpresst, zum anderen wird der so gebildete Erntegutballen auch weitergefördert, und zwar bezüglich einer Längsachse von vorne nach hinten. Das heißt die vorgesehene Förderrichtung der Erntegutballen definiert hier und im Folgenden die Orientierungen "vorne" und "hinten". Die Längsachse sowie die nachfolgend noch genannte Querachse und Hochachse bezeichnen Achsen der Ballenpresse. Allgemein stehen die Längsachse, Querachse und Hochachse paarweise senkrecht zueinander. Bevorzugt verläuft die Querachse senkrecht zur Pressachse. Die Längsachse kann insbesondere horizontal und entgegengesetzt zu einer Fahrtrichtung der Ballenpresse verlaufen. Die Querachse kann insbesondere horizontal sowie quer zur Fahrtrichtung verlaufen und die Hochachse kann bevorzugt vertikal verlaufen. Allerdings sind ausdrücklich auch andere Verläufe möglich und die Bezeichnungen der Achsen sind insofern nicht einschränkend auszulegen. Man könnte insofern auch allgemein von einer ersten, zweiten und dritten Achse sprechen. Die Pressachse kann in einigen Ausführungsformen mit der Längsachse der Ballenpresse übereinstimmen, sie kann aber auch gegenüber derselben geneigt sein. Hinsichtlich des Erntegutflusses ist dem Presskanal in der Regel eine Sammelkammer vorgeschaltet, in welcher eine Fördervorrichtung oder Sammelvorrichtung dazu eingerichtet ist, das Erntegut zu portionieren und portionsweise weiterzufördern. Unter Umständen wird das Erntegutdurch die Sammelvorrichtung auch vorverdichtet.

Um die Form des fertigen Ballens zu sichern, wird er innerhalb des Presskanals mit einem Bindemittel versehen. Bei dem Bindemittel, welches auch als Bindematerial bezeichnet werden kann, kann es sich um ein Garn oder ein thermoplastisches Band (zum Beispiel aus PET) handeln. Es wird normalerweise in einer Mehrzahl von separaten Schleifen, die quer zur Pressachse beabstandet sind, um den Ballen gelegt. Die Bindeanordnung dient auch und vor allem dazu, den Ballen mit Bindemittel zu versehen. Ein wesentlicher Bestandteil der Bindeanordnung ist die Nadelschwinge, die eine Mehrzahl von bezüglich einer Querachse zueinander versetzt angeordneten Bindenadeln aufweist, von denen jede ausgebildet ist, einen Bindemittelstrang bezüglich einer Hochachse aufwärts durch den Presskanal hindurchzuführen. Der jeweilige Bindemittelstrang kann von einem Bindemittelvorrat, insbesondere einer Bindemittelrolle, entnommen und zur Bindenadel geführt werden. Hierzu kann die Ballenpresse ein System von Umlenkrollen aufweisen. Die Nadelschwinge weist eine Mehrzahl von Bindenadeln auf, die zum Beispiel an einem gemeinsamen Träger befestigt sein können. Sie sind bezüglich der Querachse zueinander versetzt. Die Anzahl der Bindenadeln an der Nadelschwinge ist grundsätzlich nicht begrenzt, kann allerdings typischerweise zwischen zwei und acht liegen. Jede der Bindenadeln kann einen Bindemittelstrang durch den Presskanal führen, und zwar bezüglich der Hochachse aufwärts. Somit definiert die Bewegung des Bindemittelstrangs bezüglich der Hochachse diejenige Richtung, die als "aufwärts" bezeichnet wird. Dies kann insbesondere eine Bewegung entgegen der Wirkrichtung der Schwerkraft sein. Die Bewegung der Bindenadeln sowie die Bewegung des Bindemittelstrangs verlaufen im Allgemeinen allerdings nicht parallel zur Hochachse. Man kann sagen, dass die jeweilige Bindenadel den Bindemittelstrang von einer Unterseite des Presskanals zu einer Oberseite hindurchführt, wobei die Begriffe "Oberseite" und "Unterseite" mit Bezug auf die Richtung "aufwärts" zu verstehen sind. Die Nadelschwinge kann um eine Schwingenachse schwenkbar sein, die parallel zur Querachse verläuft. Allerdings ist die Erfindung nicht auf diese Ausgestaltung beschränkt.

Weiterhin weist die Bindeanordnung wenigstens eine vordere Halteeinheit auf, die dazu eingerichtet ist, einen durch eine Bindenadel aufwärts durch den Presskanal hindurchgeführten ersten Halteabschnitt eines Bindemittelstrangs festzuhalten. Die vordere Halteeinheit weist bevorzugt zwei miteinander zusammenwirkende Halteelemente auf, von denen wenigstens eines beweglich ist. Typischerweise wird die vordere Halteeinheit über eine Knoterwelle oder Steuerwelle gesteuert, die auch weitere Abläufe des Bindevorgangs steuern kann. Die vordere Halteeinheit kann einen Abschnitt jeweils eines Bindemittelstrangs, welcher hier als "erster Halteabschnitt" bezeichnet wird, festhalten. Regelmäßig ist jedem Bindemittelstrang eine vordere Halteeinheit zugeordnet, das heißt, jeweils eine Halteeinheit ist dazu eingerichtet, den ersten Halteabschnitt genau eines der Bindemittelstränge festzuhalten. Das Festhalten beruht auf einem Kraftschluss, der gegebenenfalls durch einen Formschluss ergänzt wird. In einigen Ausführungsformen kann man die Halteeinheiten auch als Klemmeinheiten bezeichnen und statt von einem Festhalten von einem Festklemmen sprechen. An die vordere Halteeinheit kann ein Trennelement gekoppelt sein, das dazu eingerichtet ist, den Bindemittelstrang benachbart zum ersten Halteabschnitt zu durchtrennen. Die Begriffe "vordere Halteeinheit" und "erster Halteabschnitt" dienen allgemein nur zur begrifflichen Unterscheidung und implizieren nicht, dass zwangsläufig eine weitere (zum Beispiel hintere) Halteeinheit und/oder ein zweiter Halteabschnitt vorhanden sein müssen.

Der erste Halteabschnitt kann den Ausgangspunkt einer neuen Bindemittelschleife bilden, die im weiteren Verlauf um einen neu entstehenden Erntegutballen gelegt wird. Ausgehend vom ersten Halteabschnitt verläuft der Bindemittelstrang zwischen dem neu entstehenden Ballen und dem vorhergehenden, bereits gebundenen Ballen abwärts durch den Presskanal. Mit zunehmender Größe des Erntegutballens wandert sein hinteres Ende entlang der Längsachse weiter nach hinten, wobei sich ein Teil des Bindemittelstrangs oberseitig des neu entstehenden Erntegutballens bis zum hinteren Ende desselben erstrecken muss, wo der Bindemittelstrang dann zwischen den beiden Erntegutballen abwärts führt. Da der Abstand zwischen der vorderen Halteeinheit und dem hinteren Ende des Erntegutballens sukzessive zunimmt, ist eine mit der Zeit zunehmende Länge des an der Oberseite befindlichen Abschnitts notwendig. Im Stand der Technik wird deshalb nach und nach Bindemittel zwischen den Erntegutballen nachgezogen. Aufgrund der auftretenden Reibung zwischen Bindemittel und Erntegutballen bedeutet dies eine erhebliche Belastung für den Bindemittelstrang.

Erfindungsgemäß weist die Bindeanordnung wenigstens eine Auslenkungsvorrichtung auf, welche durch einen Auslenkungsantrieb aus einer Bereitschaftsposition in eine Auslenkungsposition verstellbar ist, wodurch wenigstens ein gegenüber der vorderen Halteeinheit bewegliches Erfassungselement der Auslenkungsvorrichtung wenigstens anteilig entlang der Pressachse bewegbar ist und wenigstens ein Bindemittelstrang im Abstand zum ersten Halteabschnitt durch ein Erfassungselement erfassbar und gegenüber der vorderen Halteeinheit auslenkbar ist, um Bindemittel durch den Presskanal nachzuziehen und eine von der vorderen Halteeinheit über das Erfassungselement verlaufende Bindemittelschlaufe zu erzeugen, welche am Erfassungselement einen Richtungswechsel bezüglich der Pressachse aufweist.

Die Bindeanordnung weist wenigstens eine Auslenkungsvorrichtung auf, gegebenenfalls auch eine Mehrzahl von Auslenkungsvorrichtungen. Durch den Auslenkungsantrieb ist die Auslenkungsvorrichtung antreibbar, so dass sie aus einer ersten Position, die als Bereitschaftsposition bezeichnet wird, in eine zweite Position verstellbar ist, die als Auslenkungsposition bezeichnet wird. Die Bereitschaftsposition und die Auslenkungsposition können insbesondere den äußersten Positionen eines Bewegungsbereichs entsprechen. Es sind aber auch Ausführungsformen denkbar, in denen die Auslenkungsvorrichtung zum Beispiel über die Auslenkungsposition hinaus verstellbar ist. Der Auslenkungsantrieb kann zum Beispiel als hydraulischer, pneumatischer oder elektrischer Antrieb ausgebildet sein. Der Auslenkungsantrieb könnte aber zum Beispiel auch ein Federelement aufweisen, das zuvor gespannt wurde und beim Entspannen das Verstellen der Auslenkungsvorrichtung bewirkt. Die Auslenkungsvorrichtung kann direkt oder indirekt mit dem Auslenkungsantrieb verbunden sein. Die Auslenkungsvorrichtung weist wenigstens ein Erfassungselement auf, bevorzugt eine Mehrzahl von Erfassungselementen. Wenigstens ein Erfassungselement, bevorzugt jedes Erfassungselement, ist gegenüber der vorderen Halteeinheit beweglich. Das jeweilige Erfassungselement ist bevorzugt auch gegenüber einem Hauptrahmen der Ballenpresse beweglich. Durch das Verstellen in die Auslenkungsposition kann wenigstens ein gegenüber der vorderen Halteeinheit bewegliches Erfassungselement der Auslenkungsvorrichtung wenigstens anteilig entlang der Pressachse bewegt werden. Die Bewegung des Erfassungselements muss nicht parallel zur Pressachse verlaufen, allerdings enthält sie eine Bewegungskomponente, die parallel oder antiparallel zur Pressachse verläuft. Somit ergibt sich eine Positionsveränderung bezüglich der Pressachse. Die Richtung, in der sich das Erfassungselement von der Bereitschaftsposition zur Auslenkungsposition bewegt, wird nachfolgend auch als Auslenkungsrichtung bezeichnet. Sie kann entlang des gesamten Weges konstant sein, sie kann sich aber auch ändern. Das heißt das Erfassungselement muss sich nicht geradlinig bewegen.

Entsprechend der Bewegung des Erfassungselements kann wenigstens ein Bindemittelstrang durch ein Erfassungselement erfasst werden. Dabei ist bevorzugt jedem Bindemittelstrang wenigstens ein Erfassungselement zugeordnet, insbesondere genau ein Erfassungselement. Der Bindemittelstrang wird im Abstand zum ersten Halteabschnitt - welcher von der vorderen Halteeinheit festgehalten wird - erfasst und ausgelenkt. Durch die Auslenkung wird Bindemittel durch den Presskanal nachgezogen. Insbesondere kann das Bindemittel zwischen dem im Aufbau befindlichen Erntegutballen und dem dahinter liegenden, bereits fertiggestellten Erntegutballen hindurchgezogen werden. Als Ergebnis bildet sich eine Bindemittelschlaufe, die von der vorderen Halteeinheit über das Erfassungselement führt. Am Erfassungselement weist die Bindemittelschlaufe einen Richtungswechsel bezüglich der Pressachse auf, man kann auch sagen, eine Richtungsumkehr. Das heißt der Bindemittelstrang verläuft einerseits des Erfassungselements in einer ersten Richtung bezüglich der Pressachse (zum Beispiel nach hinten), während er andererseits des Erfassungselements in einer entgegengesetzten zweiten Richtung bezüglich der Pressachse verläuft (zum Beispiel nach vorn). Der Bindemittelstrang muss dabei nicht parallel zur Pressachse verlaufen. Der Richtungswechsel kann sich insbesondere aus der entlang der Pressachse erfolgenden Bewegung des Erfassungselements ergeben, bei welcher der erfasste Bindemittelstrang entlang der Pressachse ausgelenkt wird. Man kann auch sagen, dass die Bindemittelschlaufe bezüglich der Pressachse hin und her verläuft. Sie weist wenigstens zwei Schlaufenabschnitte auf, deren Position bezüglich der Pressachse sich überschneiden. Die Schlaufenabschnitte können beispielsweise bezüglich der Hochachse beabstandet sein. In einigen Ausführungsformen kann die Bindemittelschlaufe eine Mehrzahl von Richtungswechseln aufweisen. Die Bindemittelschlaufe stellt einen Bindemittelvorrat oberhalb des Erntegutballens dar, der während der weiteren Ballenbildung sukzessive aufgebraucht werden kann, wenn der Erntegutballen wie beschrieben anwächst. Solange die Bindemittelschlaufe aufgebraucht wird, muss kein weiteres Bindemittel durch den Presskanal nachgezogen werden, das heißt eine weitere Belastung des Bindemittelstrangs wird vermieden. Aufgrund der wenigstens anteiligen Bewegung des Erfassungselements entlang der Pressachse kann insbesondere eine große Bindemittelschlaufe erzeugt werden. Ein entsprechend großer Bewegungsbereich des Erfassungselements entlang der Pressachse ist konstruktiv gut realisierbar, ohne dass es zu einer Beeinflussung mit benachbarten Bindemittelsträngen kommt, oder mit Elementen der Bindeanordnung, die benachbarten Bindemittelsträngen zugeordnet sind.

Während die Bindemittelschlaufe gebildet wird und sich das Erfassungselement gegenüber der vorderen Halteeinheit bewegt, bewegt sich der Bindemittelstrang über das Erfassungselement hinweg, das heißt das Erfassungselement hat nacheinander mit unterschiedlichen Bereichen des Bindemittelstrangs Kontakt. Es ist möglich, dass der Bindemittelstrang gleitend am Erfassungselement geführt ist. Um Reibungskräfte und eine mögliche Belastung des Bindemittelstrangs zu minimieren, ist es allerdings bevorzugt, dass das Erfassungselement drehbar gelagert ist. Es kann zum Beispiel als Rolle oder Walze ausgebildet sein. Die Drehachse verläuft vorteilhaft senkrecht zur Auslenkungsrichtung. Insbesondere kann sie parallel zur Querachse verlaufen.

Nachdem die Bindemittelschlaufe erzeugt wurde, wird sie nach und nach wieder aufgebraucht. Die Bindemittelschlaufe ist dazu vorgesehen, beim Bilden des aktuellen Erntegutballens unter Verbrauch der Bindemittelschlaufe einen, insbesondere oberhalb des aktuellen Erntegutballens, angeordneten Bindemittelabschnitt zu bilden. Das Aufbrauchen der Bindemittelschlaufe würde erschwert oder verhindert, wenn das Erfassungselement in der Auslenkungsposition verbleiben und den Bindemittelstrang weiter erfasst halten würde. Das heißt, die Bindemittelschlaufe muss nach ihrer Erzeugung wieder freigegeben werden. Dies könnte in unterschiedlicher Weise geschehen, zum Beispiel indem das Erfassungselement sukzessive nachgibt, allerdings den Bindemittelstrang weiterhin unter Spannung hält. Es wäre allerdings schwierig, die Bewegung des Erfassungselements mit dem Anwachsen des Erntegutballens zu koordinieren. Auch wäre es möglich, dass das Erfassungselement in der Auslenkungsposition mechanisch vom Bindemittelstrang entkoppelt wird, was allerdings einen entsprechenden Mechanismus für die Entkopplung erfordern würde. Bevorzugt ist die Bindeanordnung dazu eingerichtet, nach dem Erzeugen der Bindemittelschlaufe durch Zurückstellen der Auslenkungsvorrichtung in die Bereitschaftsposition die Bindemittelschlaufe zu entspannen. Das heißt, nachdem die die Bindemittelschlaufe erzeugt wurde, wird die Auslenkungsvorrichtung aus der Auslenkungsposition zurück in die Bereitschaftsposition verstellt. Dies kann unmittelbar nach dem Erreichen der Auslenkungsposition erfolgen oder mit einer Verzögerung. Die Geschwindigkeit der Verstellung kann unterschiedlich gewählt sein. Zumindest muss die Auslenkungsvorrichtung rechtzeitig wieder in der Bereitschaftsposition sein, wenn der nächste Erntegutballen gebildet wird. Auch soll die Geschwindigkeit so groß sein, dass die Bindemittelschlaufe entspannt wird. Das Verstellen in die Bereitschaftsposition kann durch den Auslenkungsantrieb erfolgen. Sofern der Auslenkungsantrieb wie oben erwähnt ein Federelement aufweist, kann entweder das Rückstellen in die Bereitschaftsposition motorisch erfolgen, wobei das Federelement gespannt wird, oder das Verstellen in die Auslenkungsposition kann motorisch erfolgen, wobei das Federelement gespannt wird, um nachfolgend das Rückstellen in die Bereitschaftsposition bewirken zu können.

Vorteilhaft ist die Bindeanordnung dazu eingerichtet, die Bindemittelschlaufe mit einer maximalen Gesamtlänge zu erzeugen, die wenigstens 20%, bevorzugt wenigstens 40%, weiter bevorzugt wenigstens 60% einer Länge eines fertiggestellten Erntegutballens in Richtung der Pressachse entspricht. Während der Erntegutballen anwächst, wird die Bindemittelschlaufe nach und nach aufgebraucht und bildet schließlich zumindest einen Teil des Bindemittelabschnitts, der sich parallel zur Pressachse auf der Oberseite des Erntegutballens erstreckt. Dessen Länge ist mit der Länge des Erntegutballens identisch. Die maximale Gesamtlänge der Bindemittelschlaufe ist die größte Länge, die die Bindemittelschlaufe zwischenzeitlich erreicht. Diese kann insbesondere dann erreicht werden, wenn die Auslenkungsvorrichtung gerade die Auslenkungsposition erreicht hat. Zu messen ist die Gesamtlänge ausgehend von der vorderen Halteeinheit über das Erfassungselement bis zu dem Punkt, an dem der Bindemittelstrang die Vorderseite des zuletzt fertiggestellten Erntegutballens erreicht. Die Gesamtlänge sollte so beschaffen sein, dass die Bindemittelschlaufe, zumindest während einer ausreichend langen Anfangsphase der Ballenbildung, vorhanden ist. Insofern sind wenigstens 20% der Ballenlänge sinnvoll, wobei größere Werte vorzuziehen sind. Um eine derartige Gesamtlänge zu erreichen, kann eine Auslenkungsstrecke, die das Erfassungselement zwischen der Bereitschaftsposition und der Auslenkungsposition zurücklegt, wenigstens 10%, wenigstens 30%, oder wenigstens 50% der Länge des Erntegutballens entsprechen.

Bevorzugt ist das Erfassungselement wenigstens teilweise in einer Auslenkungsrichtung bewegbar, die wenigstens überwiegend in einem Winkel von höchstens 30° zur Pressachse verläuft. Der Winkel kann insbesondere höchstens 20° oder höchstens 10° betragen. Die Auslenkungsrichtung verläuft somit annähernd parallel zur Pressachse. Bevorzugt verläuft sie parallel zur Pressachse. "Wenigstens überwiegend" bedeutet, dass dies für den überwiegenden Teil (über 50%) des Verstellweges zwischen Bereitschaftsposition und Auslenkungsposition gilt. Insbesondere kann dies durchgehend gelten, also für den gesamten Verstellweg. Das heißt das Erfassungselement wird beim Verstellen nahezu parallel oder nahezu antiparallel zur Bewegungsrichtung der Erntegutballen innerhalb des Presskanals bewegt. Somit kann eine große Bindemittelschlaufe erzeugt werden, ohne dass hierfür in Richtung der Hochachse viel Raum benötigt wird. Weitere Vorteile ergeben sich, wenn die Auslenkungsrichtung nach hinten gerichtet ist, also wenigstens annähernd parallel zur Bewegungsrichtung der Erntegutballen. Dies wird nachfolgend noch erläutert.

Prinzipiell ist eine rotatorische Verstellung des Erfassungselements zwischen der Bereitschaftsposition und der Auslenkungsposition denkbar, also zum Beispiel ein Schwenken. Dies bringt allerdings im Allgemeinen Nachteile hinsichtlich des benötigten Bauraums mit sich, wenn eine große Bindemittelschlaufe erzeugt werden soll. Daher ist es bevorzugt, dass das Erfassungselement translatorisch verstellt wird, um den Bindemittelstrang auszulenken. Diese Ausführungsform kann bevorzugt mit der oben Genannten kombiniert werden, bei welcher die Auslenkungsrichtung zumindest annähernd parallel zur Pressachse verläuft. Ebenfalls bevorzugt ist das Erfassungselement geradlinig translatorisch verstellbar, so dass die Auslenkungsrichtung konstant ist.

Eine Ausgestaltung sieht vor, dass der Auslenkungsantrieb wenigstens einen Linearaktor aufweist, der bevorzugt als Hydraulikzylinder ausgebildet ist. Alternativ könnte auch zum Beispiel ein Pneumatikzylinder oder ein elektrischer Linearaktor eingesetzt werden. Auch eine Linearfeder, zum Beispiel eine Schraubenfeder, wäre denkbar. Bevorzugt kann der Auslenkungsantrieb zwei Linearaktoren aufweisen. Diese können bezüglich der Querachse versetzt angeordnet sein, zum Beispiel beiderseits der Mittelsenkrechten der Ballenpresse. Der wenigstens eine Linearaktor kann insbesondere direkt mit wenigstens einer Auslenkungsvorrichtung gekoppelt sein. Im Fall einer konstanten Auslenkungsrichtung kann der Linearaktor vorteilhaft parallel zu dieser ausgerichtet sein.

Eine weitere Möglichkeit besteht darin, dass der Auslenkungsantrieb als Zahnstangenantrieb ausgebildet ist, mit einer kraftübertragend an das wenigstens eine Erfassungselement gekoppelten Zahnstange. Die Zahnstange ist translatorisch verschiebbar gelagert, zum Beispiel am Hauptrahmen. Sie wird über ein Zahnrad angetrieben. Die Bewegung der Zahnstange wird auf das wenigstens eine Erfassungselement übertragen. Zum Beispiel kann die Verschiebungsrichtung der Zahnstange mit der Auslenkungsrichtung identisch sein.

Gemäß einer besonders bevorzugten Ausgestaltung ist die Auslenkungsvorrichtung dazu eingerichtet, den Bindemittelstrang bezüglich der Längsachse vorderseitig zu erfassen und nach hinten auszulenken. Das heißt das Erfassungselement ist bezüglich der Längsachse vor dem Bindemittelstrang angeordnet und wird dann nach hinten bewegt. Der Bindemittelstrang wird bezüglich der Längsachse nach hinten ausgelenkt und die Auslenkungsrichtung weist nach hinten, wenn auch nicht notwendigerweise parallel zur Längsachse oder zur Pressachse. Somit bewegt sich das Erfassungselement bezüglich der Längsachse in die gleiche Richtung wie der im Aufbau befindliche Erntegutballen. Dies hat wiederum entscheidende Vorteile im Hinblick auf die Belastung des Bindemittelstrangs. Wirkt zum Beispiel der Presskolben auf den Erntegutballen ein, während die Bindemittelschlaufe noch erzeugt wird, führt dies zu einer Kraftspitze, die die Reibungskraft auf den Bindemittelstrang erhöht. Gleichzeitig führt die Einwirkung des Presskolbens aber auch dazu, dass sich beide Erntegutballen nach hinten bewegen. Das heißt in dem Zeitintervall, in dem die Reibungskraft kurzzeitig ansteigt, bewegen sich die Erntegutballen wenigstens anteilig in Auslenkungsrichtung, wodurch die Bindemittelschlaufe kurzzeitig entspannt wird. Daher ist es unwahrscheinlich, dass die erhöhte Reibungskraft zu einer erhöhten Belastung des Bindemittelstrangs führt. Wenngleich dieser Effekt erwünscht ist, sollte die mittlere Bewegungsgeschwindigkeit des Erntegutballens, also die Geschwindigkeit, mit der der Erntegutballen wächst, kleiner sein als die Geschwindigkeit des Erfassungselements. Sofern die Bewegungsrichtungen nicht-parallel sind, gilt diese Aussage für die Komponente der Geschwindigkeit des Erfassungselements, die parallel zur Pressachse verläuft.

Bevorzugt ist die Bindeanordnung dazu eingerichtet, die Auslenkungsvorrichtung von der Bereitschaftsposition in die Auslenkungsposition zu verstellen, während eine Mehrzahl von Bewegungszyklen eines im Presskanal angeordneten Presskolbens erfolgt. Der Presskolben bewegt sich in bekannter Weise oszillierend im Presskanal, wobei eine Periode der Bewegung hier als Bewegungszyklus bezeichnet wird. Das Verstellen der Auslenkungsvorrichtung in die Auslenkungsposition, und somit die Ausbildung der Bindemittelschlaufe, erfolgen während mehrerer Bewegungszyklen. Dadurch wird die Bindemittelschlaufe vergleichsweise langsam aufgebaut, sodass übermäßige auf den Bindemittelstrang wirkende Zugkräfte vermieden werden. Diese Ausführungsform kann insbesondere mit der oben beschriebenen kombiniert werden, bei welcher der Bindemittelstrang nach hinten ausgelenkt wird.

Eine Ausführungsform sieht vor, dass die Bindeanordnung derart eingerichtet ist, dass nach einem Zurückfahren der Bindenadeln durch den Presskanal der Bindemittelstrang sich von der vorderen Halteeinheit bezüglich der Längsachse nach vorne verlaufend zum Presskanal erstreckt, in welchem er vorderseitig an einem fertiggestellten Erntegutballen anliegt. Dieser Verlauf des Bindemittelstrangs wird vor allem durch eine geeignete Anordnung der vorderen Haltevorrichtung erreicht. Der zuletzt fertiggestellte Erntegutballen bildet nach hinten eine Anlagefläche für den Bindemittelstrang. Der Bindemittelstrang erstreckt sich daher innerhalb des Presskanals an der Vorderseite des Erntegutballens. Oberhalb des Presskanals bildet der Erntegutballen keine entsprechende Anlagefläche. Dort erstreckt sich der Bindemittelstrang ausgehend von der vorderen Halteeinheit bezüglich der Längsachse nach vorne. Anders ausgedrückt, die vordere Halteinheit ist weiter hinten angeordnet als die Vorderseite des fertigen Erntegutballens. Dementsprechend verläuft der Bindemittelstrang nicht auf dem kürzesten Weg, sondern schräg auf den Presskanal zu. Dies bezieht sich auf den Zustand unmittelbar nachdem die Bindenadeln durch den Presskanal zurückbewegt wurden und somit den Presskanal wieder vollständig freigegeben haben. Der Bindemittelstrang wird danach vom Erfassungselement erfasst. Bis dahin oder kurz nach dem Erfassen kann durch die hier beschriebene Ausführungsform die Bandspannung begrenzt werden. Da sich beim Entstehen des nächsten Erntegutballens der bereits fertiggestellte Erntegutballen nach hinten verschiebt, gilt dies auch für den daran anliegenden Teil des Bindemittelstrangs. Dieser bewegt sich bezüglich der Längsachse nach hinten, wodurch sich zunächst der Abstand zur vorderen Halteeinheit verkürzt und der oberhalb des Presskanals befindliche Teil des Bindemittelstrangs entspannt wird.

Gemäß einer vorteilhaften Ausgestaltung ist die Auslenkungsvorrichtung dazu eingerichtet, beim Verstellen in die Auslenkungsposition einen zweiten Halteabschnitt des Bindemittelstrangs zu einer hinteren Haltevorrichtung zu führen, wobei die Bindeanordnung dazu eingerichtet ist, daraufhin den zweiten Halteabschnitt mit der hinteren Haltevorrichtung festzuhalten. Die hintere Haltevorrichtung ist bezüglich der Längsachse hinter der vorderen Haltevorrichtung angeordnet. Wenngleich die Erfindung nicht hierauf beschränkt ist, kann zwischen der vorderen Halteanordnung und der hinteren Halteanordnung eine mittlere Halteanordnung vorgesehen sein, welcher eine Reibschweißeinheit zugeordnet sein kann. Bei Ballenpressen im Stand der Technik ist es bekannt, dass ein Bindemittelstrang mit der hinteren Halteeinheit festgehalten wird, wenn er vor einem Verschweißen von der vorderen Halteeinheit freigegeben wird. Dabei kann die hintere Halteeinheit aber frühestens geschlossen werden, wenn der Erntegutballen bezüglich der Längsachse die Position der hinteren Halteeinheit erreicht hat. Dies ist bei dieser Ausgestaltung anders, da die Bindemittelschlaufe sich schneller nach hinten bewegen kann als der Erntegutballen. Die hintere Halteeinheit kann den zweiten Halteabschnitt des Bindemittelstrangs daher zu einem früheren Zeitpunkt erfassen. Insbesondere kann dies geschehen, bevor das Erfassungselement die Auslenkungsposition erreicht. Schon während der Ausbildung der Bindemittelschlaufe kann daher eine für den Bindemittelstrang erforderliche Haltekraft auf die vordere und die hintere Halteeinheit aufgeteilt werden. Dies gilt auch dann, falls die Bindemittelschlaufe während der Ballenbildung aufgebraucht sein sollte und weiteres Bindematerial durch den Bereich zwischen den Erntegutballen nachgezogen werden muss. Die Bindeanordnung kann die hintere Halteeinheit insbesondere in Abhängigkeit von einer Position der Auslenkungsvorrichtung ansteuern. Diese Position kann zum Beispiel mittels eines Sensors erfasst werden.

Eine Ausführungsform sieht vor, dass die Auslenkungsvorrichtung dazu eingerichtet ist, den Bindemittelstrang bezüglich der Längsachse hinterseitig zu erfassen und nach vorne auszulenken. Das heißt das Erfassungselement ist bezüglich der Längsachse hinter dem Bindemittelstrang angeordnet und wird dann nach vorne bewegt. Der Bindemittelstrang wird bezüglich der Längsachse nach vorne ausgelenkt und die Auslenkungsrichtung weist nach vorne. Somit bewegt sich das Erfassungselement bezüglich der Längsachse in die entgegengesetzte Richtung gegenüber dem im Aufbau befindlichen Erntegutballen.

Hinsichtlich der Antriebsübertragung auf das Erfassungselement bestehen unterschiedliche Möglichkeiten. Eine Ausführungsform sieht vor, dass das Erfassungselement an einem flexiblen Trägerband befestigt ist, welches über eine Mehrzahl von Führungsrollen geführt ist. Das Trägerband kann umlaufend geschlossen sein. Es kann insgesamt flexibel ausgebildet sein oder aus einer Mehrzahl beweglich verbundener Glieder bestehen. Das Trägerband ist über eine Mehrzahl von Führungsrollen geführt, wobei an jeder Führungsrolle ein Richtungswechsel möglich ist. Dort kann sich auch die Auslenkungsrichtung des Erfassungselements ändern. Das Trägerband kann in sich geschlossen sein. Es kann direkt oder indirekt an den Auslenkungsantrieb gekoppelt sein, zum Beispiel indem eine der Führungsrollen als Antriebsrolle ausgebildet ist und über den Auslenkungsantrieb antreibbar ist. Wenigstens einer Führungsrolle kann ein Umlenkelement zugeordnet sein, durch welches der Bindemittelstrang zwischen der vorderen Halteeinheit und dem Erfassungselement umlenkbar ist. Ein solches Umlenkelement ermöglicht es dem Bindemittelstrang, der sich ändernden Auslenkungsrichtung zu folgen. Andernfalls würde der Bindemittelstrang unter Umständen sich auf direktem Weg geradlinig zwischen vorderer Halteeinheit und Erfassungselement erstrecken. Durch die Umlenkung kann die Länge der Bindemittelschlaufe vergrößert werden, ohne ihre Ausdehnung entlang einer der Achsen entsprechend zu vergrößern. Das heißt der Platzbedarf zur Erzeugung einer Bindemittelschlaufe bestimmter Länge kann minimiert werden.

Bevorzugt weist die Auslenkungsvorrichtung wenigstens ein Verbindungsteil auf, durch welches wenigstens ein Erfassungselement kraftübertragend wenigstens indirekt mit dem Auslenkungsantrieb verbunden ist, wobei das Verbindungsteil dazu eingerichtet ist, eine Zugkraft und/oder eine Druckkraft vom Auslenkungsantrieb auf das Erfassungselement zu übertragen. In einigen Ausführungsformen kann das Verbindungsteil flexibel oder sogar biegeschlaff sein. In letzterem Fall kann es lediglich zur Übertragung einer Zugkraft dienen, was unter Umständen nachteilig ist. Bevorzugt ist das jeweilige Verbindungsteil starr ausgebildet. Es kann wenigstens abschnittsweise, insbesondere durchgehend, parallel zur Auslenkungsrichtung verlaufen. Bevorzugt ist das Verbindungsteil dazu eingerichtet, beim Verstellen aus der Bereitschaftsposition in die Auslenkungsposition eine Zugkraft zu übertragen (also das Erfassungselement zu ziehen) und beim Rückstellen in die Bereitschaftsposition eine Druckkraft zu übertragen (also das Erfassungselement zu drücken). In diesem Fall kann sich das Verbindungsteil vom Erfassungselement ausgehend in Auslenkungsrichtung erstrecken. Alternativ kann beim Verstellen eine Druckkraft übertragen werden und beim Rückstellen eine Zugkraft, wobei sich das Verbindungsteil, vom Erfassungselement ausgehend, entgegen der Auslenkungsrichtung erstrecken kann. Bevorzugt ist jedes Verbindungsteil mit genau einem Erfassungselement verbunden. Ebenfalls bevorzugt ist jedes Erfassungselement mit zwei Verbindungsteilen verbunden, die insbesondere entlang der Querachse beabstandet sein können. Durch den Zwischenraum zwischen den Verbindungsteilen kann der Bindemittelstrang hindurchtreten. Dabei können die Verbindungsteile dem Zwischenraum zugewandte Führungsflächen aufweisen, die wenigstens abschnittsweise schräg zur Hochachse und/oder zur Längsachse verlaufen können. Diese Führungsflächen dienen dazu, ein ungewolltes seitliches Ausweichen des Bindemittelstrangs zu verhindern.

Vorteilhaft ist bezüglich der Querachse neben wenigstens einem Verbindungsteil ein Durchtrittsbereich ausgebildet, durch welchen die Bindenadel hindurchführbar ist, wenn die Auslenkungsvorrichtung in der Bereitschaftsposition ist, und dessen Position bezüglich der Querachse sich mit der des zugehörigen Erfassungselements überschneidet. Der Durchtrittsbereich kann bezüglich der Querachse zwischen zwei Verbindungsteilen ausgebildet sein, wobei er mit dem oben genannten Zwischenraum identisch sein kann. Falls einem Erfassungselement nur ein einziges Verbindungsteil zugeordnet ist, ist der Durchtrittsbereich bezüglich der Querachse seitlich neben dem Verbindungsteil angeordnet. Allerdings überschneidet sich die Position des Erfassungselements bezüglich der Querachse mit derjenigen des Durchtrittsbereichs, was notwendig ist, damit das Erfassungselement den durch die Bindenadel geführten Bindemittelstrang erfassen kann.

Gemäß einer Ausgestaltung ist die Bindeanordnung dazu eingerichtet, das Verstellen der Auslenkungsvorrichtung in die Auslenkungsposition in Abhängigkeit von einer Position der Nadelschwinge auszulösen. Dabei kann entweder die Position der Nadelschwinge unmittelbar genutzt werden oder eine Position eines anderen Elements, aus der sich die Position der Nadelschwinge unmittelbar ergibt. Zum Beispiel kann mittels eines Sensors eine Position einer Kurbel überwacht werden, die mechanisch an die Nadelschwinge gekoppelt ist. In jedem Fall ermöglicht ein Verstellen in Abhängigkeit von der Position der Nadelschwinge eine optimale zeitliche Abstimmung. Während des Bindezyklus taucht die Nadelschwinge nach oben aus dem Presskanal auf, übergibt den Bindemittelstrang, der wie beschrieben von der vorderen Halteeinheit festgehalten wird, und taucht dann wieder in und schließlich unter den Presskanal ab. Damit die Auslenkungsvorrichtung in die Auslenkungsposition verstellt werden kann, ist es in den meisten Ausführungsformen notwendig, dass die Bindenadel zumindest wieder in den Presskanal abgetaucht ist. Des Weiteren kann es notwendig sein, dass die Bindemittelschleife des gerade fertiggestellten Erntegutballens geschlossen ist, zum Beispiel durch Verschweißen von Bandenden, bevor die Auslenkungsvorrichtung verstellt wird. Wie bereits oben erwähnt, wird die Bindemittelschlaufe bevorzugt durch Zurückstellen in die Bereitschaftsposition entspannt. Hierbei kann die Bindeanordnung dazu eingerichtet sein, das Erreichen der Auslenkungsposition sensorisch zu erfassen und daraufhin das Zurückstellen in die Bereitschaftsposition auszulösen.

Gemäß einer Ausführungsform weist die Auslenkungsvorrichtung einen antriebsübertragend an den Auslenkungsantrieb gekoppelten, am Hauptrahmen geführten Auslenkungsrahmen auf sowie eine Mehrzahl über Verbindungsteile mit dem Auslenkungsrahmen verbundene Erfassungselemente. Bevorzugt sind alle Erfassungselemente mit einem einzigen Auslenkungsrahmen verbunden. Der Auslenkungsrahmen erstreckt sich bevorzugt entlang der Querachse über wenigstens einen überwiegenden Teil der Breite des Presskanals. Vom Auslenkungsrahmen, der in sich starr ausgebildet sein kann, erstrecken sich eine Mehrzahl von Verbindungsteilen zu den Erfassungselementen. Insbesondere können zwei Verbindungsteile pro Erfassungselement vorgesehen sein. Der Auslenkungsrahmen ist am Hauptrahmen geführt, welcher insgesamt eine hohe Stabilität aufweist und sich im Betrieb nur wenig verformt. Der Hauptrahmen kann dabei ein eigens zur Führung des Auslenkungsrahmens vorgesehenes Element aufweisen, zum Beispiel eine Führungsschiene, eine Führungsrolle oder dergleichen. Bevorzugt ist der Auslenkungsrahmen parallel zur Auslenkungsrichtung geführt. Insbesondere kann eine Doppelrollenführung vorgesehen sein, wobei jeweils zwei Führungsrollen, die am Auslenkungsrahmen angeordnet sind, mit einer Führungsschiene am Hauptrahmen zusammenwirken. Durch die zwei Führungsrollen, die entlang der Auslenkungsrichtung zueinander versetzt sind, kann verhindert werden, dass sich der Auslenkungsrahmen gegenüber dem Hauptrahmen dreht.

Vorteilhaft sind die Verbindungsteile unabhängig vom Auslenkungsrahmen an einem oberhalb des Presskanals angeordneten Knotertisch geführt und sind beweglich mit dem Auslenkungsrahmen verbunden. Der Knotertisch bildet in einem Bereich einen oberen Abschluss des Presskanals. Die oben genannte Knoterwelle oder Steuerwelle kann am Knotertisch drehbar gelagert sein. Die Halteeinheiten können entweder direkt mit dem Knotertisch verbunden sein oder mit der Knoterwelle (und somit indirekt mit dem Knotertisch). Der Knotertisch ist seinerseits mit dem Hauptrahmen verbunden. Allerdings weist er aus konstruktiven Gründen eine größere Elastizität auf als der Hauptrahmen. Das heißt im Betrieb kommt es zu unter Umständen nicht vernachlässigbaren Verformungen des Knotertischs. Wenn die Verbindungsteile daher am Knotertisch geführt sind, während der Auslenkungsrahmen am Hauptrahmen geführt ist, kann es zu Lageveränderungen zwischen Auslenkungsrahmen und Verbindungsteilen kommen. Diese könnten zwar beispielsweise durch eine elastische Verformung eines Verbindungsteils kompensiert werden, allerdings bestünde dabei die Gefahr, dass sich das Verbindungsteil gegenüber dem Knotertisch verkantet oder dass zumindest die Reibung deutlich zunimmt. Daher ist bei dieser Ausgestaltung vorgesehen, dass die Verbindungsteile beweglich mit dem Auslenkungsrahmenverbunden sind. Dabei kann wenigstens ein rotatorischer und/oder translatorischer Freiheitsgrad vorgesehen sein. Insbesondere können die Verbindungsteile entlang der Hochachse beweglich sein, da dies der häufigsten Verformungsrichtung des Knotertischs entspricht. Der Auslenkungsrahmen selbst kann bezüglich der Längsachse hinter den Halteeinheiten angeordnet sein, sowohl in der Bereitschaftsposition als auch in der Auslenkungsposition, während sich die Positionen der Verbindungsteile bezüglich der Längsachse mit Positionen von oben genannten Halteeinheiten überschneiden können, zumindest in der Bereitschaftsposition. Dabei ist allerdings bevorzugt vorgesehen, dass die Verbindungsteile sowie die Erfassungselemente bezüglich der Hochachse unterhalb der Halteeinheiten angeordnet sind. Sie können sich somit unterhalb der Halteeinheiten bewegen, ohne deren Funktion zu beeinträchtigen.

Insbesondere dann, wenn die Bereitschaftsposition und die Auslenkungsposition weit voneinander entfernt sind, kann es problematisch sein, die Führung eines Verbindungsteils über den gesamten Verstellweg aufrechtzuerhalten. Dies gilt spätestens, wenn der Verstellweg länger ist als der Knotertisch. Dieses Problem wird in einer Ausgestaltung dadurch gelöst, dass wenigstens ein Verbindungsteil entgegen der Auslenkungsrichtung über das Erfassungselement hinausragt, wodurch es in der Auslenkungsposition mit einem entgegen der Auslenkungsrichtung zum Erfassungselement beabstandeten Führungsbereich am Knotertisch geführt ist. Wenn zum Beispiel die Auslenkungsrichtung nach hinten weist und sich das Verbindungsteil vom Erfassungselement nach hinten erstreckt, um eine Zugkraft auszuüben, ist in dieser Ausgestaltung vorgesehen, dass es sich auch nach vorne erstreckt. Dieser Teil des Verbindungteils dient nicht zur Zugkraftübertragung, sondern dazu, den Kontakt mit dem Knotertisch aufrechtzuerhalten. Auch wenn zum Beispiel das Erfassungselement den Knotertisch nach hinten verlassen hat, kann der Führungsbereich noch mit dem Knotertisch in Kontakt bleiben und eine sichere Führung gewährleisten.

Die Aufgabe wird zudem gelöst durch ein Verfahren zum Betreiben einer Ballenpresse mit einem Presskanal, in welchem Erntegutballen bezüglich einer Längsachse von vorne nach hinten entlang einer Pressachse förderbar sind, sowie mit einer Bindeanordnung, die eine Nadelschwinge mit einer Mehrzahl von bezüglich einer Querachse zueinander versetzt angeordneten Bindenadeln aufweist, wenigstens eine vordere Halteeinheit, sowie wenigstens eine Auslenkungsvorrichtung. Bei dem Verfahren
- führt jede Bindenadel einen Bindemittelstrang bezüglich einer Hochachse aufwärts durch den Presskanal hindurch,
- hält wenigstens eine vordere Halteeinheit einen durch eine Bindenadel aufwärts durch den Presskanal hindurchgeführten ersten Halteabschnitt eines Bindemittelstrangs fest, und
- wird die Auslenkungsvorrichtung durch einen Auslenkungsantrieb aus einer Bereitschaftsposition in eine Auslenkungsposition verstellt, wodurch wenigstens ein gegenüber der vorderen Halteeinheit bewegliches Erfassungselement der Auslenkungsvorrichtung wenigstens anteilig entlang der Pressachse bewegt wird und wenigstens ein Bindemittelstrang im Abstand zum ersten Halteabschnitt durch das Erfassungselement erfasst und gegenüber der vorderen Halteeinheit ausgelenkt wird, so dass Bindemittel durch den Presskanal nachgezogen und eine von der vorderen Halteeinheit über das Erfassungselement verlaufende Bindemittelschlaufe erzeugt wird, welche am Erfassungselement einen Richtungswechsel bezüglich der Pressachse aufweist.

Die genannten Begriffe wurden bereits oben mit Bezug auf die erfindungsgemäße Ballenpresse erläutert und werden daher nicht nochmals erklärt. Vorteilhafte Ausgestaltungen des erfindungsgemäßen Verfahrens entsprechen denen der erfindungsgemäßen Ballenpresse.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine perspektivische Darstellung eines Teils einer erfindungsgemäßen Ballenpresse;
- Fig. 2A-2C: Seitenansichten eines Teils der Ballenpresse aus Fig.1 in verschiedenen Zuständen während eines Bindezyklus;
- Fig. 3A-3E: Seitenansichten eines Teils der Ballenpresse aus Fig.1 in verschiedenen Zuständen während der Bildung einer Bindemittelschlaufe;
- Fig. 4: eine perspektivische Darstellung von Teilen einer Bindeanordnung sowie eines Knotertischs der Ballenpresse;
- Fig. 5: eine perspektivische Darstellung einer Auslenkungsvorrichtung der Bindeanordnung;
- Fig. 6: eine stark schematisierte Seitenansicht eines Teils einer zweiten erfindungsgemäßen Ballenpresse;
- Fig. 7: eine stark schematisierte Seitenansicht eines Teils einer dritten erfindungsgemäßen Ballenpresse; sowie
- Fig. 8: eine stark schematisierte Seitenansicht eines Teils einer vierten erfindungsgemäßen Ballenpresse.

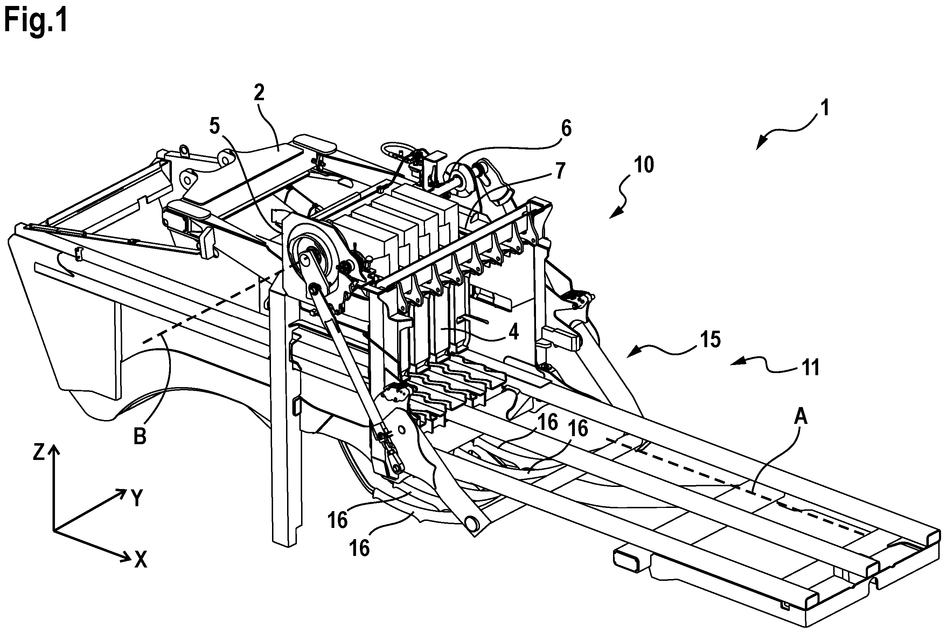

Fig. 1 zeigt eine perspektivische Darstellung von Teilen einer erfindungsgemäßen Ballenpresse 1, genauer gesagt einer Quaderballenpresse. Hier und in den weiteren Figuren sind die entgegen der Fahrtrichtung nach hinten weisende Längsachse X, die Querachse Y und die Hochachse Z dargestellt. Verschiedene Komponenten, die zum Verständnis der Erfindung nicht relevant sind, sind nicht dargestellt, zum Beispiel ein Fahrwerk sowie eine Deichsel, mittels welcher die Ballenpresse 1 an ein Zugfahrzeug koppelbar ist. Die Erfindung ist ausdrücklich nicht auf gezogene oder getragene Ballenpressen beschränkt, sondern bezieht sich auch auf selbstfahrende Ballenpressen oder stationäre Ballenpressen.

Die Ballenpresse 1 weist einen Hauptrahmen 2 auf. Innerhalb des Hauptrahmens 2 ist ein Presskanal 11 definiert, der sich entlang einer Pressachse A erstreckt. In diesem Beispiel ist die Pressachse A gegenüber der Längsachse X geneigt, sie könnte aber auch parallel hierzu verlaufen. Die seitliche sowie obere Verkleidung des Presskanals 11 ist in der Figur teilweise weggelassen.

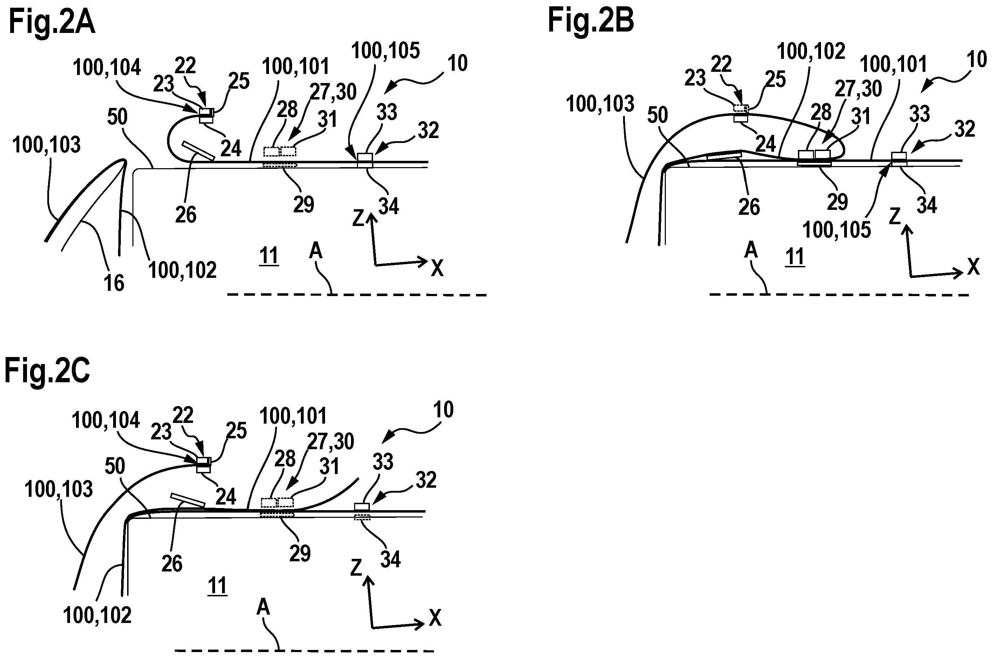

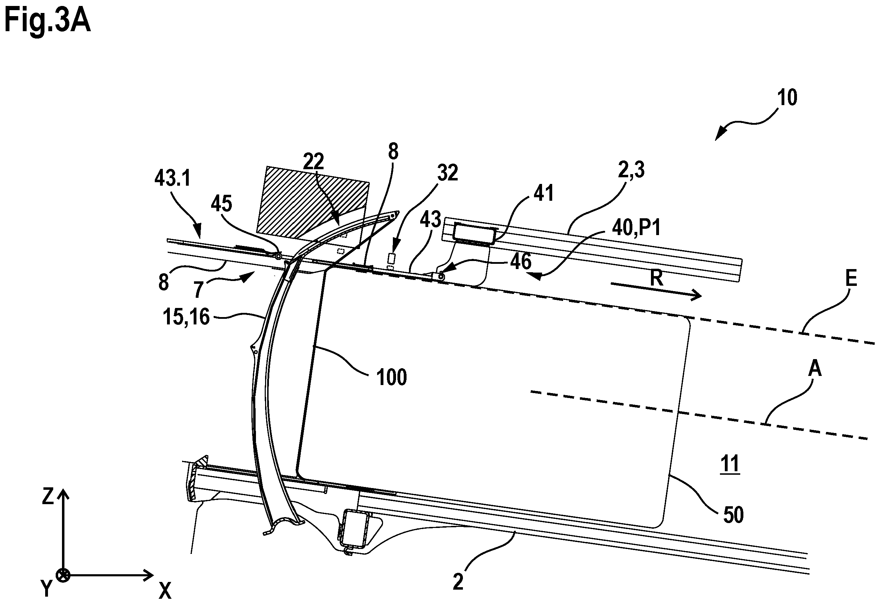

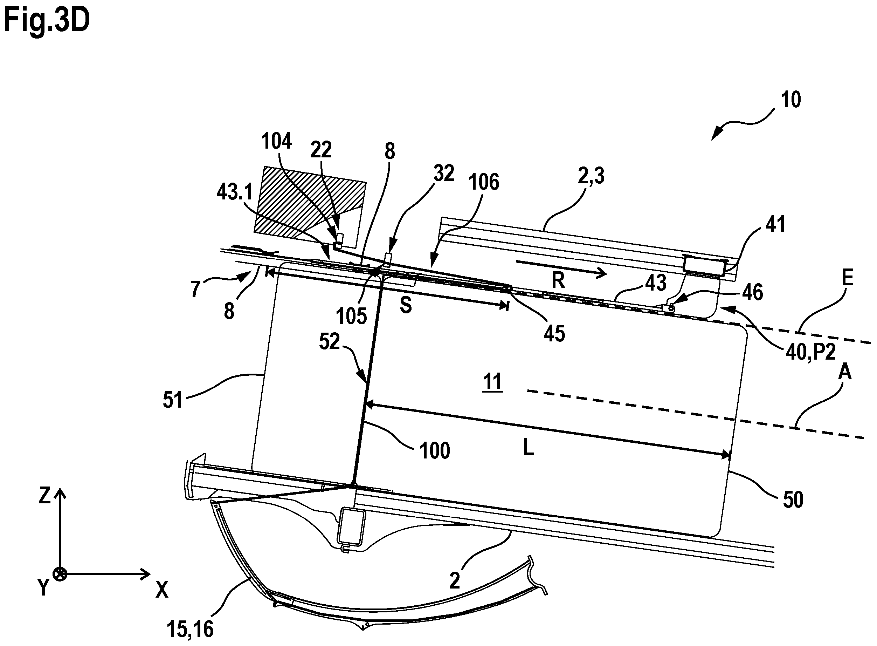

Innerhalb des Presskanals 11 werden (in Fig. 2A bis 2C sowie Fig. 3A und 3D schematisch dargestellte) Erntegutballen 50, 51, insbesondere hier Quaderballen, sukzessive aus Portionen von Erntegut aufgebaut, welche in einer hier nicht sichtbaren Sammelkammer gesammelt, insbesondere vorgepresst, wurden. Das von der Sammelkammer in den Presskanal 11 geförderte Erntegut wird im Presskanal 11 durch einen oszillierenden Presskolben 4 verdichtet. Wenn der Erntegutballen 50 seine vorbestimmte Größe erreicht hat, wird er mittels eines Bindemittels, genauer gesagt, eines thermoplastischen Bandes, zusammengebunden. Dabei werden in der hier beispielhaft dargestellten Ballenpresse 1 insgesamt sechs Schleifen aus Bindemittel, die in Richtung der Querachse Y und somit quer zur Pressachse A voneinander beabstandet sind, um den Erntegutballen 50 gelegt. Das Bindemittel der jeweiligen Schleife führt auf der Oberseite des Erntegutballens 50 bezüglich der Längsachse X nach hinten, dann an dessen Rückseite bezüglich der Hochachse Z abwärts, an der Unterseite nach vorne und an der Vorderseite nach oben. Um die Schleife zu vollenden, muss ein Bindemittelstrang 100 von unten durch den Presskanal 11 nach oben geführt werden. Dies geschieht mittels jeweils einer von insgesamt sechs Bindenadeln 16, die Teil einer Nadelschwinge 15 sind. Die Nadelschwinge 15 ist in hier nicht näher erläuterter Weise mit einer Knoterwelle oder Steuerwelle 6 verbunden und durch diese antreibbar. Die Steuerwelle 6 kann über ein Kupplungsgetriebe 5 mit einem (nicht dargestellten) motorischen Antrieb verbunden werden, so dass sie sich um eine Steuerwellenachse B dreht und die Nadelschwinge 15 für einen Bindezyklus angetrieben wird.

Die Nadelschwinge 15 gehört zu einer Bindeanordnung 10 der Ballenpresse 1. Die Bindeanordnung 10 weist außerdem für jeden Bindemittelstrang 100 jeweils eine in Fig. 2A-2C sowie Fig. 3A-3E dargestellte vordere Halteeinheit 22 auf, eine mittlere Halteeinheit 27 sowie eine hintere Halteeinheit 32. Der vorderen Halteeinheit 22 ist ein Trennelement 25 zugeordnet und der mittleren Halteeinheit 27 ist eine Schweißeinheit 30 zugeordnet. Außerdem ist für jeden Bindemittelstrang 100 ein Niederhalter 26 vorgesehen. Die Funktion der einzelnen Elemente wird nachfolgend anhand von Fig.2A bis 2C erläutert.

Fig.2A repräsentiert einen Zustand kurz vor der Fertigstellung des Erntegutballens 50, während durch den (hier nicht dargestellten) Presskolben 4 eine letzte Schicht Erntegut hinzugefügt wird. Ein erster Strangabschnitt 101, welcher einen Endabschnitt des Bindemittelstrangs 100 bildet, liegt auf der Oberseite des Erntegutballens 50 auf und ist endseitig mit einem ersten Halteabschnitt 104 zwischen einem ersten vorderen Klemmelement 23 und einem zweiten vorderen Klemmelement 24 der vorderen Halteeinheit 22 festgehalten. Das Trennelement 25 ist starr an das erste vordere Klemmelement 23 gekoppelt. Der Niederhalter 26 ist inaktiv und hat gegebenenfalls nur geringfügigen oder keinen Kontakt mit dem ersten Strangabschnitt 101. Ein erstes mittleres Klemmelement 28 und ein zweites mittleres Klemmelement 29 der mittleren Halteeinheit 27, ebenso wie ein Reibkopfträger 22 der Schweißeinheit 30, sind aus der Zeichenebene herausgeschwenkt. Derart außerhalb der Zeichenebene positionierte Elemente sind hier und in Fig.2B und 2C jeweils durch gestrichelte Linien dargestellt. Durch einen hier nicht dargestellten Sensor wurde festgestellt, dass dem Erntegutballen 50 nur noch eine Schicht hinzugefügt werden muss, damit er eine vorgegeben Sollgröße erreicht. Daraufhin wurde ein Reibkopfträger 31 der Schweißeinheit 30 gestartet, noch bevor die Steuerwelle 6 über das Kupplungsgetriebe 5 mit dem motorischen Antrieb verbunden wird. Ebenfalls wurde bereits die hintere Halteeinheit 32 geschlossen, so dass der erste Strangabschnitt 101 mit einem zweiten Halteabschnitt 105 zwischen einem ersten hinteren Klemmelement 33 und einem zweiten hinteren Klemmelement 34 eingeschlossen ist. Die Bindenadel 16 führt einen zweiten Strangabschnitt 102 desselben Bindemittelstrangs 100 sowie einen hiermit zusammenhängenden dritten Strangabschnitt 103 durch den Presskanal 11 hindurch nach oben.

Fig.2B repräsentiert einen Zustand, in dem die Bindenadel 16 den zweiten Strangabschnitt 102 auf dem ersten Strangabschnitt 101 abgelegt hat. Die vorderen Klemmelemente 23, 24 und das Trennelement 25 wurden aus der Zeichenebene geschwenkt, um Platz für die Bindenadel 16 zu machen. Da der erste Strangabschnitt 101 mittels der hinteren Halteeinheit 32 festgeklemmt ist, wird verhindert, dass er sich verschiebt oder völlig verloren geht. Der Niederhalter 26 wurde so verstellt, dass er den ersten Strangabschnitt 101 von oben beaufschlagt und verhindert, dass dieser in die Bewegungsbahn der Bindenadel 16 hineinragt. Das erste mittlere Klemmelement 28 und der Reibkopfträger 31 werden in die Zeichenebene geschwenkt und schließen den ersten Strangabschnitt 101 zwischen sich und dem zweiten mittleren Klemmelement 29 ein. Dabei wird das zweite vordere Klemmelement 24 wieder in die Zeichenebene geschwenkt. Durch Aktivierung eines am Reibkopfträger 31 angeordneten Reibkopfes 32 werden der erste Strangabschnitt 101 und der zweite Strangabschnitt 102 reibverschweißt.

Die hintere Halteeinheit 32 kann nun gelöst werden, wobei das erste hintere Klemmelement 33 in diesem Fall stationär ist und somit in der Zeichenebene verbleibt. Auch der Niederhalter 26 wird vom ersten Strangabschnitt 101 gelöst, wobei er zwischen diesem und dem zweiten Strangabschnitt 102 herausbewegt wird. Die vordere Halteeinheit 22 erfasst den mit dem zweiten Strangabschnitt 102 zusammenhängenden dritten Strangabschnitt 103 und das Trennelement 25 trennt den zweiten Strangabschnitt 102 hiervon ab. Dieser Zustand ist in Fig.2C dargestellt. Nachdem die Strangabschnitte 101, 102 verschweißt wurden, kann die mittlere Halteeinheit 27 einschließlich des Reibkopfträgers 31 gelöst und aus der Zeichenebene herausbewegt werden. Der nunmehr vollständig umreifte Erntegutballen 50 kann nach hinten gefördert werden, wobei er durch einen nachfolgenden, im Aufbau befindlichen Erntegutballen 51 sukzessive entlang der Pressrichtung A nach hinten gedrückt wird. Der von der vorderen Halteeinheit 22 erfasste dritte Strangabschnitt 103 übernimmt beim nächsten Bindezyklus die Rolle des ersten Strangabschnitts 101.

In den Figuren ist ein Kontaktbereich 52 eingezeichnet, in welchem die aufeinander folgenden Erntegutballen 50, 51 unmittelbar benachbart zueinander sind, wobei sie teilweise in unmittelbarem Kontakt miteinander stehen und teilweise den Bindemittelstrang 100 zwischen sich einschließen. Beim Aufbau des neuen Erntegutballens 51 wird an dessen Oberseite nach und nach mehr Bindemittel benötigt, da sich der Kontaktbereich 52 sukzessive von der vorderen Halteeinheit 22 fortbewegt, die den ersten Halteabschnitt 104 festhält. Ein Nachziehen von Bindemittel durch den Kontaktbereich 52 kann allerdings zu erheblichen Belastungen führen, da die Erntegutballen 50, 51 durch den Presskolben 4 gegeneinander gedrückt werden, was wiederum zu erheblichen Reibungskräften zwischen dem Bindemittelstrang 100 und den Erntegutballen 50, 51 führt.

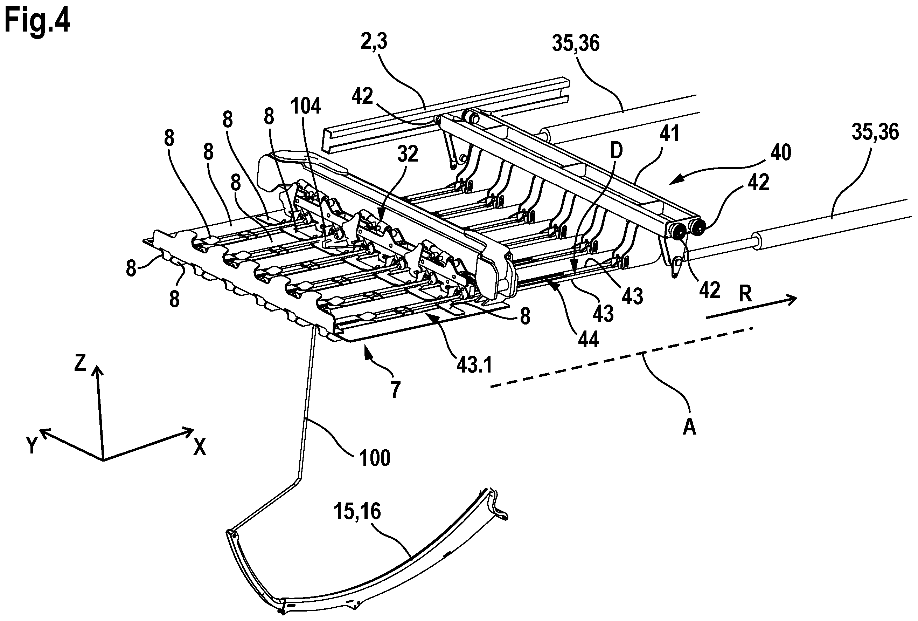

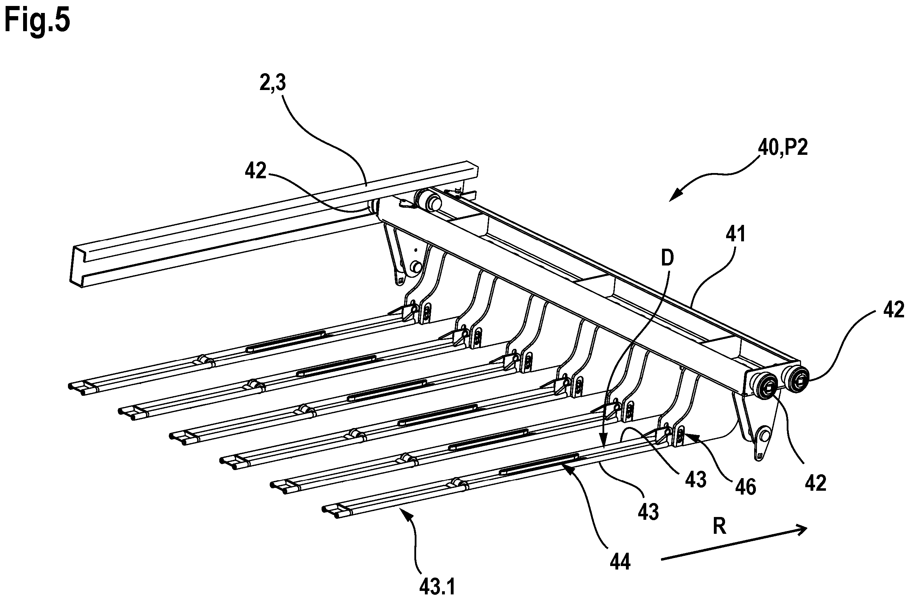

Um dieses Problem zu minimieren, ist die Bindeanordnung 10 dazu eingerichtet, eine Bindemittelschlaufe 106 anzulegen, die beim Ballenaufbau nach und nach aufgebraucht werden kann. Wesentlich für den Aufbau der Bindemittelschlaufe 106 ist eine Auslenkungsvorrichtung 40, die mittels jeweils eines Erfassungselements 45 auf einen Bindemittelstrang 100 einwirkt. Dieser Vorgang wird nachfolgend mit Bezug auf Fig.3A-3E erläutert sowie mit Bezug auf Fig.4 und 5, in denen die Auslenkungsvorrichtung 40 im Detail erkennbar ist. In Fig.1 sowie 2A-2C wurde die Auslenkungsvorrichtung 40 aus Gründen der Übersichtlichkeit weggelassen. Das jeweilige Erfassungselement 45 und auch die Auslenkungsvorrichtung 40 insgesamt sind in einer Auslenkungsrichtung R gegenüber dem Hauptrahmen 2 verschiebbar. Die Auslenkungsrichtung R verläuft in diesem Fall parallel zur Pressachse A. Ein Auslenkungsrahmen 41 erstreckt sich entlang der Querachse Y über die gesamte Breite des Presskanals 11. Der Auslenkungsrahmen 41 ist beiderseits über jeweils zwei Führungsrollen 42 an einer hier als C-Profil ausgebildeten Führungsschiene 3 des Hauptrahmens 2 geführt. In etwa senkrecht unterhalb der Führungsrollen 42 greift jeweils ein als Hydraulikzylinder ausgebildeter Linearaktor 36 am Auslenkungsrahmen 41 an. Die Linearaktoren 36 sind in hier nicht dargestellter Weise mit dem Hauptrahmen 2 verbunden und bilden gemeinsam einen Auslenkungsantrieb 35.

Mit dem Auslenkungsrahmen 41 sind insgesamt zwölf stangenförmige Verbindungsteile 43 verbunden, von denen jeweils zwei ein Erfassungselement 45 mit dem Auslenkungsrahmen 41 verbinden. Das rollenförmige Erfassungselement 45 ist drehbar an jeweils zwei Verbindungsteilen 43 gelagert. Zwischen den Verbindungsteilen 43 ist ein Durchtrittsbereich D ausgebildet, der in Auslenkungsrichtung R, also nach hinten, offen ausgebildet ist. Zum Durchtrittsbereich D hin weisen die Verbindungsteile 43 jeweils Führungsflächen 44 für den Bindemittelstrang 100 auf. Ein Verlängerungsabschnitt 43.1 jedes Verbindungsteils 43 ragt entgegen der Auslenkungsrichtung R über das Erfassungselement 45 hinaus. Die Verbindungsteile 43 sind unabhängig vom Auslenkungsrahmen 41 an einem Knotertisch 7 geführt, der sich oberhalb des Presskanals 11 erstreckt. Der Knotertisch 7 weist Führungselemente 8 auf, die zur verschieblichen Führung der Verbindungsteile 43 dienen. Durch den Verlängerungsabschnitt 43.1 kann die Führung aufrechterhalten werden, auch wenn sich die Auslenkungsvorrichtung 40 weit in Auslenkungsrichtung R nach hinten bewegt. Der Knotertisch 7 ist mit dem Hauptrahmen 2 verbunden, verformt sich aber während des Betriebs elastisch, weshalb sich auch die Führungselemente 8 gegenüber den Führungsschienen 3 bewegen können. Um dem Rechnung zu tragen, sind die Verbindungsteile 43 durch kurze Kulissenführungen 46 beweglich mit dem Auslenkungsrahmen 41 verbunden. Sie können sich dadurch in geringem Maße in Richtung der Hochachse Z gegenüber dem Auslenkungsrahmen 41 bewegen. In Auslenkungsrichtung R ist eine - bis auf unvermeidliches Spiel - positionsfeste Verbindung gegeben.

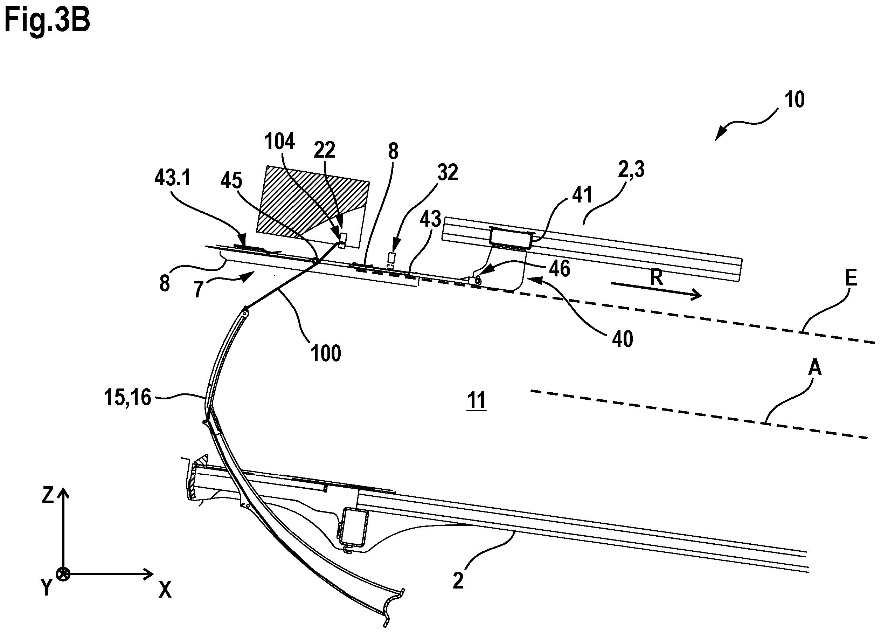

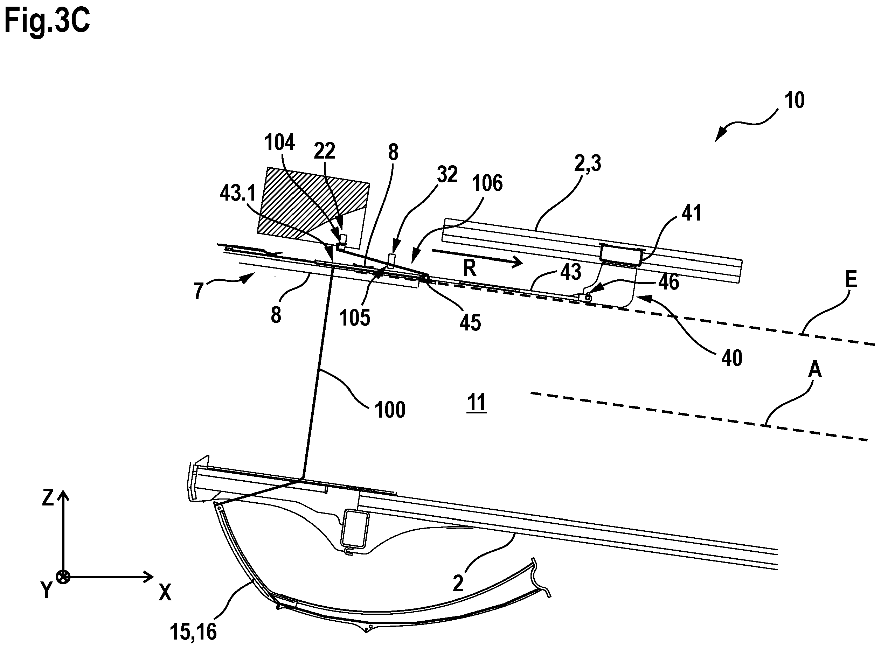

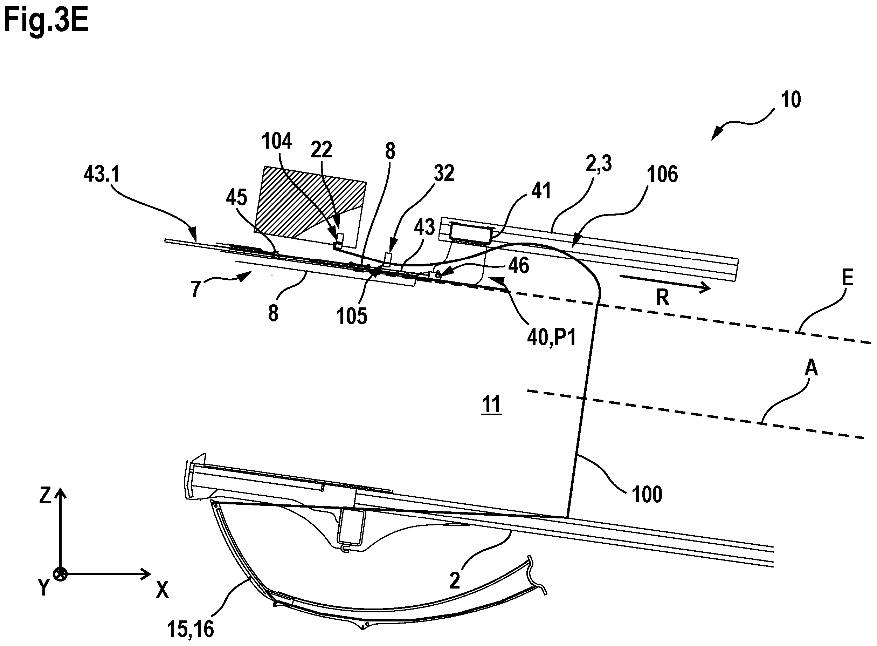

Aus Gründen der Übersichtlichkeit sind die Erntegutballen 50, 51 sowie der Kontaktbereich 52 zwischen diesen in Fig.3B, 3C und 3E weggelassen und nur in Fig. 3A und 3D eingezeichnet. Auch sind in Fig.3A-3E das Trennelement 25, der Niederhalter 26 und die mittlere Halteeinheit 27 nicht dargestellt. Fig.3A zeigt einen Zustand, der zeitlich zwischen Fig.2A und 2B liegt, das heißt ein Erntegutballen 50 ist fertiggestellt und die Bindenadeln 16 haben den Bindemittelstrang 100 so weit nach oben geführt, dass dieser von der mittleren Halteeinheit 27 übernommen werden kann. Die Bindenadeln 16 beginnen ihre Abwärtsbewegung, befinden sich aber noch teilweise über einer durch den Knotertisch 7 definierten Knotertischebene E, die parallel zur Pressachse A verläuft und dicht oberhalb des Presskanals 11 verläuft. Der Auslenkungsantrieb 35 ist inaktiv und die Auslenkungsvorrichtung 40 mit den Erfassungselementen 45 befindet sich in einer Bereitschaftsposition P1. Die jeweilige Bindenadel 16 ist durch den Durchtrittbereich D zwischen zwei Verbindungsteilen 43 hindurchgeführt.

Fig.3B zeigt einen zeitlich nach Fig.2C liegenden Zustand. Die Bindenadel 16 bewegt sich abwärts und befindet sich vollständig unterhalb der Knotertischebene E, wobei die Position der Nadelschwinge 15 sensorisch erfasst wird. Daraufhin wird der Auslenkungsantrieb 35 aktiviert, sodass sich die Auslenkungsvorrichtung 40 in Auslenkungsrichtung R nach hinten bewegt. Das Erfassungselement 45 hat auf dem ersten Teil des Weges noch keinen Kontakt mit dem Bindemittelstrang 100. Vielmehr bewegt sich letzterer noch innerhalb des Durchtrittsbereichs D. In Fig. 3B hat das Erfassungselement 45 gerade Kontakt mit dem Bindemittelstrang 100.

In Fig.3C hat die Nadelschwinge 15 wieder ihre Ausgangsposition unterhalb des Presskanals 11 erreicht. Das Erfassungselement 45 hat begonnen, den Bindemittelstrang 100 nach hinten auszulenken und die Bindemittelschlaufe 106 zu bilden, wobei die Verbindungsteile 43 eine Zugkraft auf das Erfassungselement 45 übertragen. Die hintere Halteeinheit 32, die bisher geöffnet war, kann daher den Bindemittelstrang 100 im zweiten Halteabschnitt 105 greifen. Das Schließen der hinteren Halteeinheit 32 wird in Abhängigkeit von der sensorisch erfassten Position der Auslenkungsvorrichtung 40 ausgelöst. Der Bindemittelstrang 100 ist nachfolgend durch die vordere Halteeinheit 22 und die hintere Halteeinheit 32 gehalten, so dass sich die notwendige Haltekraft auf beide Halteeinheiten 22, 32 aufteilt. Der Presskolben 4 hat zwischenzeitlich schon eine oder mehrere Schichten des nächsten Erntegutballens 51 im Presskanal 3 verdichtet. Durch die fortschreitende Bewegung der Auslenkungsvorrichtung 40 wächst die Bindemittelschlaufe 106 oberhalb des Presskanals 11 und oberhalb des bereits fertigen vorangehenden Erntegutballens 50. Das Erfassungselement 45 hat sich bereits nach hinten über den Knotertisch 7 hinaus bewegt, wobei der Verlängerungsabschnitt 43.1 allerdings weiterhin in Eingriff mit den Führungselementen 8 bleibt. Der gesamte Verstellvorgang der Auslenkungsvorrichtung 40 erstreckt sich zeitlich über mehrere Bewegungszyklen des Presskolbens 4, das heißt der Presskolben 4 wirkt zwischenzeitlich auf den neu entstehenden Erntegutballen 51 ein, wodurch die Anpresskraft zwischen den Erntegutballen 50, 51 und auch die Reibung des Bindemittelstrangs 100 sprunghaft ansteigen. Allerdings bewegen sich beim Einwirken des Presskolbens 4 auch der neue Erntegutballen 51 und der im Kontaktbereich 52 befindliche Teil des Bindemittelstrangs 100 nach hinten, das heißt in Auslenkungsrichtung R. Hierdurch wird verhindert, dass sich eine übermäßige Spannung im Bindemittelstrang 100 aufbaut.

Fig.3D zeigt einen Zustand, in dem die Auslenkungsvorrichtung 40 ihre hinterste Position erreicht hat, die einer Auslenkungsposition P2 entspricht. Der Bindemittelstrang 100 wird beiderseits der Bindemittelschlaufe 106 festgehalten, und zwar zum einen durch die hintere Halteeinheit 32 sowie zum anderen im Kontaktbereich 52 durch die Klemmkraft zwischen den Erntegutballen 50, 51. Die Bindemittelschlaufe 106 weist am Erfassungselement 45 einen Richtungswechsel bezüglich der Pressachse A auf. Ausgehend von der vorderen Halteeinheit 22 verläuft der Bindemittelstrang 100 nach hinten zum Erfassungselement 45 und danach nach vorne zum Kontaktbereich 52. Man kann somit zwei bezüglich der Hochachse Z übereinanderliegende Schlaufenabschnitte erkennen, die bezüglich der Pressachse A entgegengesetzt verlaufen. In diesem Beispiel beträgt die in Fig.3D erkennbare maximale Gesamtlänge der Bindemittelschlaufe ca. 90% einer Länge L des fertiggestellten Erntegutballens 50. Eine vom Erfassungselement 45 zwischen der Bereitschaftsposition P1 und der Auslenkposition P2 zurückgelegte Auslenkungstrecke S entspricht in diesem Beispiel ca. 60% der Länge L. Das Erreichen der Auslenkungsposition P2 wird ebenfalls sensorisch erfasst. Wenn dies geschieht, werden die Linearaktoren 36 des Auslenkungsantriebs 35 gestoppt und sofort in entgegengesetzter Richtung angetrieben, also ausgefahren. Hierdurch bewegt sich die Auslenkungsvorrichtung 40 nach vorne.

In Fig.3E haben die Erfassungselemente 45 der Auslenkungsvorrichtung 40 wieder die Bereitschaftsposition P1 erreicht. Der Bindemittelstrang 100 wird weiterhin durch die vordere Halteeinheit 22 und die hintere Halteeinheit 32 gehalten. Aufgrund der Bindemittelschlaufe 106 muss bis auf Weiteres kein Bindemittel mehr durch den Kontaktbereich 52 nachgezogen werden. Die Bindemittelschlaufe 106 wird nach und nach aufgebraucht. Entweder hat der neue Erntegutballen 51 bis dahin seine vorgesehene Größe erreicht, so dass der Bindevorgang ausgelöst werden kann. Oder der Erntegutballen 51 ist noch nicht fertiggestellt, hat allerdings bereits eine solche Größe, dass das Einwirken des Presskolbens 4 zu keinem übermäßen Anstieg der Kraft zwischen den Erntegutballen 50, 51 führt, so dass Bindemittel ohne größere Probleme nachgezogen werden kann.

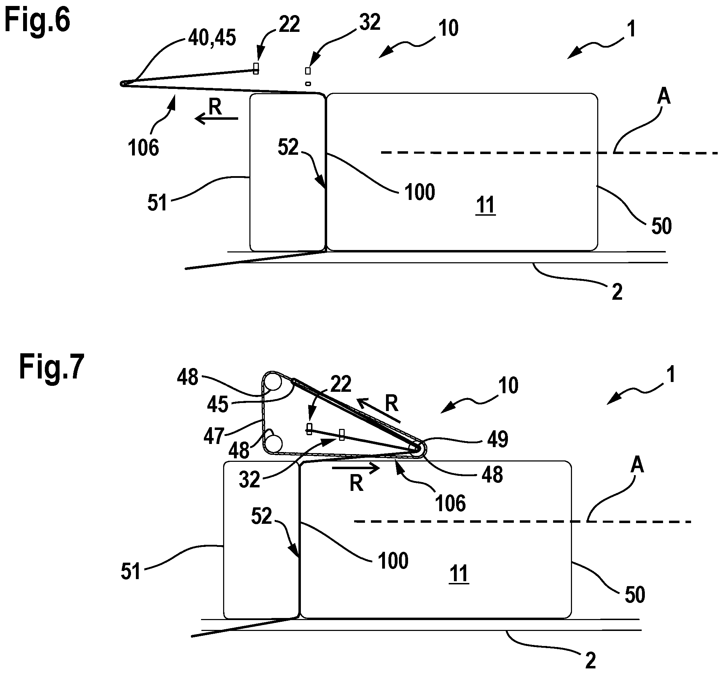

Fig.6 zeigt in stark schematisierter Form eine zweite Ausführungsform einer erfindungsgemäßen Ballenpresse 1 mit einer Bindeanordnung 10. Während die Auslenkungsvorrichtung 40 bei der ersten Ausführungsform den Bindemittelstrang 100 vorderseitig erfasst und nach hinten auslenkt, erfasst sie bei dieser Ausführungsform den Bindemittelstrang 100 hinterseitig und lenkt ihn nach vorne aus. Das heißt die Auslenkungsrichtung R weist nach vorne. Der nicht dargestellte Auslenkungsantrieb 35 kann auch bei dieser Ausgestaltung einen oder mehrere Linearaktoren aufweisen.

Fig.7 zeigt eine dritte Ausführungsform, bei welcher die Auslenkungsvorrichtung 40 ein in sich geschlossenes, flexibles Trägerband 47 aufweist, das über insgesamt drei Führungsrollen 48 geführt ist. Eine der Führungsrollen 48 ist als Antriebsrolle ausgebildet und in nicht dargestellter Weise mit dem Auslenkungsantrieb 35 verbunden. Durch Drehung der angetriebenen Führungsrolle 48 ist das Trägerband 47 umlaufend antreibbar. Das Erfassungselement 45 ist am Trägerband befestigt und folgt dessen Bewegung. Es wird daher zunächst in etwa parallel zur Pressachse A nach hinten gezogen und dann im Weiteren schräg nach vorne aufwärts. Damit die Bindemittelschlaufe 106 in etwa dem Verlauf des Trägerbands 47 folgt, ist einer Führungsrolle 48 ein Umlenkelement 49 zugeordnet, über welches der Bindemittelstrang 100 geführt wird. Bei dieser Ausführungsform weist die Bindemittelschlaufe 106 insgesamt drei Richtungswechsel bezüglich der Pressachse A auf.

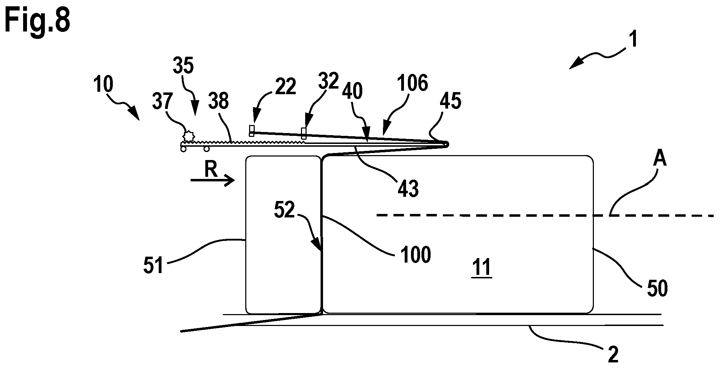

Fig.8 zeigt eine vierte Ausführungsform, bei welcher die Auslenkungsvorrichtung 40 den Bindemittelstrang 100 wiederum vorderseitig erfasst und nach hinten auslenkt. Allerdings ist der Auslenkungsantrieb 35 in diesem Fall als Zahnstangenantrieb ausgebildet, mit einem angetriebenen Zahnrad 37 sowie einer mit diesem zusammenwirkenden Zahnstange 38. Die Zahnstange 38 ist einstückig mit einem Verbindungsteil 43 ausgebildet und somit an das Erfassungselement 45 gekoppelt. Bei dieser Ausführungsform überträgt das Verbindungsteil 43 eine Druckkraft auf das Erfassungselement 45. Wenngleich der Zahnstangenantrieb in diesem Beispiel bezüglich der Längsachse X vor dem Erfassungselement 45 angeordnet ist, wäre es auch möglich, ihn ähnlich wie im ersten Ausführungsbeispiel hinter dem Erfassungselement 45 anzuordnen, wobei das Verbindungsteil 43 eine Zugkraft übertagen würde.

## Patentansprüche

1. Ballenpresse (1) mit einem Presskanal (11), in welchem Erntegutballen (50, 51) bezüglich einer Längsachse (X) von vorne nach hinten entlang einer Pressachse (A) förderbar sind, sowie mit einer Bindeanordnung (10), die eine Nadelschwinge (15) mit einer Mehrzahl von bezüglich einer Querachse (Y) zueinander versetzt angeordneten Bindenadeln (16) aufweist, von denen jede ausgebildet ist, einen Bindemittelstrang (100) bezüglich einer Hochachse (Z) aufwärts durch den Presskanal (11) hindurchzuführen, sowie wenigstens eine vordere Halteeinheit (22), die dazu eingerichtet ist, einen durch eine Bindenadel (16) aufwärts durch den Presskanal (11) hindurchgeführten ersten Halteabschnitt (104) eines Bindemittelstrangs (100) festzuhalten,
**dadurch gekennzeichnet, dass**
die Bindeanordnung (10) wenigstens eine Auslenkungsvorrichtung (40) aufweist, welche durch einen Auslenkungsantrieb (35) aus einer Bereitschaftsposition (P1) in eine Auslenkungsposition (P2) verstellbar ist, wodurch wenigstens ein gegenüber der vorderen Halteeinheit (22) bewegliches Erfassungselement (45) der Auslenkungsvorrichtung (40) wenigstens anteilig entlang der Pressachse (A) bewegbar ist und wenigstens ein Bindemittelstrang (100) im Abstand zum ersten Halteabschnitt (104) durch ein Erfassungselement (45) erfassbar und gegenüber der vorderen Halteeinheit (22) auslenkbar ist, um Bindemittel durch den Presskanal (11) nachzuziehen und eine von der vorderen Halteeinheit (22) über das Erfassungselement (45) verlaufende Bindemittelschlaufe (106) zu erzeugen, welche am Erfassungselement (45) einen Richtungswechsel bezüglich der Pressachse (A) aufweist.

2. Ballenpresse nach Anspruch 1, **dadurch gekennzeichnet, dass** die Bindeanordnung (10) dazu eingerichtet ist, nach dem Erzeugen der Bindemittelschlaufe (106) durch Zurückstellen der Auslenkungsvorrichtung (40) in die Bereitschaftsposition (P1) die Bindemittelschlaufe (106) zu entspannen.

3. Ballenpresse nach einem der vorherigen Ansprüche, **dadurch gekennzeichnet, dass** die Bindeanordnung (10) dazu eingerichtet ist, die Bindemittelschlaufe (106) mit einer maximalen Gesamtlänge zu erzeugen, die wenigstens 20%, bevorzugt wenigstens 40%, weiter bevorzugt wenigstens 60% einer Länge (L) eines fertiggestellten Erntegutballens (50) in Richtung der Pressachse (A) entspricht.

4. Ballenpresse nach einem der vorherigen Ansprüche, **dadurch gekennzeichnet, dass** das Erfassungselement (45) wenigstens teilweise in einer Auslenkungsrichtung (R) bewegbar ist, die in einem Winkel von höchstens 30° zur Pressachse (A) verläuft und bevorzugt parallel zur Pressachse (A) verläuft.

5. Ballenpresse nach einem der vorherigen Ansprüche, **dadurch gekennzeichnet, dass** das Erfassungselement (45) translatorisch verstellbar ist, um den Bindemittelstrang (100) auszulenken.

6. Ballenpresse nach einem der vorherigen Ansprüche, **dadurch gekennzeichnet, dass** der Auslenkungsantrieb (35) wenigstens einen Linearaktor (36) aufweist, der bevorzugt als Hydraulikzylinder ausgebildet ist.

7. Ballenpresse nach einem der vorherigen Ansprüche, **dadurch gekennzeichnet, dass** der Auslenkungsantrieb (35) als Zahnstangenantrieb ausgebildet ist, mit einer kraftübertragend an das wenigstens eine Erfassungselement (45) gekoppelten Zahnstange (38).

8. Ballenpresse nach einem der vorherigen Ansprüche, **dadurch gekennzeichnet, dass** die Auslenkungsvorrichtung (40) dazu eingerichtet ist, den Bindemittelstrang (100) bezüglich der Längsachse (X) vorderseitig zu erfassen und nach hinten auszulenken.

9. Ballenpresse nach einem der vorherigen Ansprüche, **dadurch gekennzeichnet, dass** die Bindeanordnung (10) dazu eingerichtet ist, die Auslenkungsvorrichtung (40) von der Bereitschaftsposition (P1) in die Auslenkungsposition (P2) zu verstellen, während eine Mehrzahl von Bewegungszyklen eines im Presskanal (11) angeordneten Presskolbens (4) erfolgt.

10. Ballenpresse nach einem der vorherigen Ansprüche, **dadurch gekennzeichnet, dass** die Auslenkungsvorrichtung (40) dazu eingerichtet ist, beim Verstellen in die Auslenkungsposition (P2) einen zweiten Halteabschnitt (105) des Bindemittelstrangs (100) zu einer hinteren Haltevorrichtung (32) zu führen, wobei die Bindeanordnung (10) dazu eingerichtet ist, daraufhin den zweiten Halteabschnitt (105) mit der hinteren Haltevorrichtung (32) festzuhalten.

11. Ballenpresse nach einem der vorherigen Ansprüche, **dadurch gekennzeichnet, dass** die Auslenkungsvorrichtung (40) wenigstens ein Verbindungsteil (43) aufweist, durch welches wenigstens ein Erfassungselement (45) kraftübertragend wenigstens indirekt mit dem Auslenkungsantrieb (35) verbunden ist, wobei das Verbindungsteil (43) dazu eingerichtet ist, eine Zugkraft und/oder eine Druckkraft vom Auslenkungsantrieb (35) auf das Erfassungselement (45) zu übertragen.

12. Ballenpresse nach einem der vorherigen Ansprüche, **dadurch gekennzeichnet, dass** bezüglich der Querachse (Y) neben wenigstens einen Verbindungsteil (43) ein Durchtrittsbereich (D) ausgebildet ist, durch welchen die Bindenadel (16) hindurchführbar ist, wenn die Auslenkungsvorrichtung (40) in der Bereitschaftsposition (P1) ist, und dessen Position bezüglich der Querachse (Y) sich mit der des zugehörigen Erfassungselements (45) überschneidet.

13. Ballenpresse nach einem der vorherigen Ansprüche, **dadurch gekennzeichnet, dass** die Bindeanordnung (10) dazu eingerichtet ist, das Verstellen der Auslenkungsvorrichtung (40) in die Auslenkungsposition (P2) in Abhängigkeit von einer Position der Nadelschwinge (15) auszulösen.

14. Ballenpresse nach einem der vorherigen Ansprüche, **dadurch gekennzeichnet, dass** die Auslenkungsvorrichtung (40) einen antriebsübertragend an den Auslenkungsantrieb (35) gekoppelten, am Hauptrahmen (2) geführten Auslenkungsrahmen (41) aufweist sowie eine Mehrzahl über Verbindungsteile (43) mit dem Auslenkungsrahmen (41) verbundene Erfassungselemente (45).

15. Ballenpresse nach einem der vorherigen Ansprüche, **dadurch gekennzeichnet, dass** die Verbindungsteile (43) unabhängig vom Auslenkungsrahmen (41) an einem oberhalb des Presskanals (11) angeordneten Knotertisch (7) geführt sind und beweglich mit dem Auslenkungsrahmen (41) verbunden sind.

16. Ballenpresse nach einem der vorherigen Ansprüche, **dadurch gekennzeichnet, dass** wenigstens ein Verbindungsteil (43) entgegen der Auslenkungsrichtung (R) über das Erfassungselement (45) hinausragt, wodurch es in der Auslenkungsposition (P2) mit einem entgegen der Auslenkungsrichtung (R) zum Erfassungselement (45) beabstandeten Verlängerungsabschnitt (43.1) am Knotertisch (1) geführt ist.

17. Verfahren zum Betreiben einer Ballenpresse (1) mit einem Presskanal (3), in welchem Erntegutballen (50, 51) bezüglich einer Längsachse (X) von vorne nach hinten entlang einer Pressachse (A) förderbar sind, sowie mit einer Bindeanordnung (10), die eine Nadelschwinge (11) mit einer Mehrzahl von bezüglich einer Querachse (Y) zueinander versetzt angeordneten Bindenadeln (12) aufweist, wenigstens eine vordere Halteeinheit (22), sowie wenigstens eine Auslenkungsvorrichtung (40), wobei
- jede Bindenadel (12) einen Bindemittelstrang (100) bezüglich einer Hochachse (Z) aufwärts durch den Presskanal (3) hindurchführt,
- wenigstens eine vordere Halteeinheit (22) einen durch eine Bindenadel (12) aufwärts durch den Presskanal (3) hindurchgeführten ersten Halteabschnitt (104) eines Bindemittelstrangs (100) festhält, und
- die Auslenkungsvorrichtung (40) durch einen Auslenkungsantrieb (35) aus einer Bereitschaftsposition (P1) in eine Auslenkungsposition (P2) verstellt wird, wodurch wenigstens ein gegenüber der vorderen Halteeinheit (22) bewegliches Erfassungselement (45) der Auslenkungsvorrichtung (40) wenigstens anteilig entlang der Pressachse (A) bewegt wird und wenigstens ein Bindemittelstrang (100) im Abstand zum ersten Halteabschnitt (104) durch ein Erfassungselement (45) erfasst und gegenüber der vorderen Halteeinheit (22) ausgelenkt wird, so dass Bindemittel durch den Presskanal (11) nachgezogen und eine von der vorderen Halteeinheit (22) über das Erfassungselement (45) verlaufende Bindemittelschlaufe (106) erzeugt wird, welche am Erfassungselement (45) einen Richtungswechsel bezüglich der Pressachse (A) aufweist.
